(19) Europäisches Patentamt / European Patent Office / Office européen des brevets

(11) **EP 4 730 916 A1**

(12) **EUROPEAN PATENT APPLICATION**
published in accordance with Art. 153(4) EPC

(43) Date of publication:
**22.04.2026 Bulletin 2026/17**

(21) Application number: **24874989.7**

(22) Date of filing: **04.10.2024**

(51) International Patent Classification (IPC):
**H05B 6/06** (2006.01)   **H05B 6/12** (2006.01)
**H02M 1/10** (2006.01)   **H02M 7/04** (2006.01)

(52) Cooperative Patent Classification (CPC):
**H02M 1/10; H02M 7/04; H05B 6/06; H05B 6/12**

(86) International application number:
**PCT/KR2024/015097**

(87) International publication number:
**WO 2025/075433 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.10.2023 KR 20230131929**

(71) Applicant: Samsung Electronics Co., Ltd.
**Suwon-si, Gyeonggi-do 16677 (KR)**

(72) Inventors:
• **KANG, Hongjoo**
  **Suwon-si, Gyeonggi-do 16677 (KR)**
• **BAE, Eundae**
  **Suwon-si, Gyeonggi-do 16677 (KR)**
• **PARK, Namju**
  **Suwon-si, Gyeonggi-do 16677 (KR)**
• **CHOI, Jiwoong**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **INDUCTION COOKING APPARATUS EMPLOYING NOISE REDUCTION METHOD**

(57)    An induction heating apparatus according to one embodiment of the present invention includes: a first operating coil for a first burner; a second operating coil for a second burner; an inverter including a plurality of switches that are switched so that current flows in the first operating coil and the second operating coil; and a processor for controlling the switching of the plurality of switches of the inverter, wherein the operating frequency of the first operating coil and the operating frequency of the second operating coil differ by at least a predetermined frequency value due to the inductance value of the first operating coil and the inductance value of the second operating coil.

FIG. 6A

EP 4 730 916 A1

**Description**

Technical Field

An embodiment of the disclosure relates to a method of reducing noise in an induction cooking device having a plurality of burners, and an induction cooking device employing the method.

Background Art

An induction range is a cooking heating device that uses the induction heating principle, and is commonly referred to as induction, induction cooking device, or induction heating device. Induction ranges do not consume oxygen and do not emit waste gases compared to gas ranges, which can reduce indoor air pollution and increase of indoor temperature. In addition, induction ranges use an indirect method of inducing heat to a heated object itself, and have the advantages of high energy efficiency and stability, and low risk of burns because heat is generated only from the heated object itself and a contact surface is not heated. Therefore, a demand for induction ranges has been continuously increasing recently.

An induction range may include a plurality of burners. In this case, the induction range provides separate operation buttons for each burner, and the user may check the burner on which a vessel is placed and perform cooking by using the operation button for the corresponding burner.

Disclosure of Invention

Solution to Problem

Aspects of embodiments of the disclosure will be set forth in part in the description which follows and, in part, will be apparent from the description, or may be learned by practice of the presented embodiments.

According to an embodiment of the disclosure, an induction heating device includes a first working coil for a circular first burner. According to an embodiment of the disclosure, the induction heating device includes a second working coil for a rectangular second burner. According to an embodiment of the disclosure, the induction heating device includes an inverter including a plurality of switches, the plurality of switches being configured to perform switching so that a current flows through the first working coil and the second working coil, and a processor configured to control the switching by the plurality of switches of the inverter. According to an embodiment of the disclosure, an operating frequency of the first working coil and an operating frequency of the second working coil differ by a predetermined frequency value or more due to an inductance value of the first working coil and an inductance value of the second working coil.

In the induction heating device according to an embodiment of the disclosure, the inverter further includes a first resonant capacitor configured to resonate with the first working coil, and a first switch and a second switch that are switched on or off for resonance between the first working coil and the first resonant capacitor, and the processor is further configured to control on-duty ratios of the first switch and the second switch to a fixed value during the asymmetric control.

According to an embodiment of the disclosure, the induction heating device includes a first working coil for a burner. According to an embodiment of the disclosure, the induction heating device includes a second working coil for a second burner. According to an embodiment of the disclosure, the induction heating device includes an inverter a plurality of switches, the plurality of switches being configured to perform switching so that a current flows through the first working coil and the second working coil, and a processor configured to control the switching by the plurality of switches. According to an embodiment of the disclosure, a maximum operating frequency of the first working coil and a maximum operating frequency of the second working coil differ by 5 kilohertz (kHz) or more.

In the induction heating device according to an embodiment of the disclosure, the first burner may be circular in shape and the second burner may be rectangular in shape.

According to an embodiment of the disclosure, a method of reducing noise by an induction heating device includes operating a first working coil for a circular first burner and a second working coil for a rectangular second burner according to a user input.

According to an embodiment of the disclosure, the method includes determining whether operating frequencies of the first working coil and the second working coil differ by a predetermined frequency value or more. According to an embodiment of the disclosure, the method includes performing asymmetric control so that an on-duty ratio of the third switch from among the third switch and a fourth switch is greater than an on-duty ratio of the fourth switch, based on a determination that the operating frequencies of the first working coil and the second working coil do not differ by the predetermined frequency value or more, the third switch and the fourth switch being turned on or off for resonance between the second working coil and a second resonant capacitor.

Brief Description of Drawings

The above and other aspects, features, and advantages of certain embodiments of the disclosure will be more apparent from the following description, taken in conjunction with the accompanying drawings listed below.

FIG. 1A and FIG. 1B are diagrams for describing an induction heating device according to an embodiment of the disclosure.

FIG. 2 is a cross-sectional view of an induction heating device on which a cooking vessel is placed, according to an embodiment of the disclosure.

FIG. 3 is an inverter circuit diagram of an induction heating device for operating a plurality of working coils, according to an embodiment of the disclosure.

FIG. 4 is a switching diagram of an inverter circuit of an induction heating device according to an embodiment of the disclosure.

FIG. 5 is a waveform diagram of resonant current detected in a plurality of working coils according to an embodiment of the disclosure.

FIG. 6A is a diagram illustrating asymmetric control switching in an inverter circuit of an induction heating device, according to an embodiment of the disclosure.

FIG. 6B is a flowchart of asymmetric control by an induction heating device, according to an embodiment of the disclosure.

FIG. 7A and FIG. 7B show an induction heating device that uses a rectangular working coil, according to an embodiment of the disclosure.

FIG. 8 is a diagram illustrating an induction heating device together with a working coil, according to an embodiment of the disclosure.

FIG. 9 is a graph showing inductances of a rectangular working coil and a circular working coil according to an embodiment of the disclosure.

FIG. 10A is a graph showing a resonant frequency of each working coil according to an embodiment of the disclosure.

FIG. 10B is a graph showing a resonant frequency of each working coil according to an embodiment of the disclosure.

FIG. 11 is a graph showing a frequency difference for each burner, according to an embodiment of the disclosure.

FIG. 12 is a diagram showing a cooking vessel placed and heated on an induction heating device, according to an embodiment of the disclosure.

FIG. 13A is a diagram for showing a relationship between coil turns and magnetic flux.

FIG. 13B is a diagram showing a small cooking vessel placed on a working coil of an induction heating device, according to an embodiment of the disclosure.

FIG. 13C is a diagram showing a large cooking vessel placed on a working coil of an induction heating device, according to an embodiment of the disclosure.

FIG. 13D is a diagram showing a cooking vessel misaligned on a burner of an induction heating device, according to an embodiment of the disclosure.

FIG. 14 is a graph showing phases of voltage and current of a working coil according to an embodiment of the disclosure.

FIG. 15 is a diagram showing an operation of removing noise through asymmetric control in an induction heating device, according to an embodiment of the disclosure.

FIG. 16 is a flowchart of performing asymmetric control in an induction heating device, according to an embodiment of the disclosure.

FIG. 17 is a block diagram of an induction heating device according to an embodiment of the disclosure.

Mode for the Invention

Hereinafter, terms used in the disclosure are briefly described, and an embodiment of the disclosure is described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of an embodiment of the disclosure. Thus, the terms used herein have to be defined based on the meaning of the terms together with the description throughout the specification.

In this disclosure, the expression "at least one of a, b, or c" can refer to "a", "b", "c", "a and b", "a and c", "b and c", "all of a, b, and c", or variations thereof.

When a part "includes" or "comprises" an element, unless there is a particular description contrary thereto, the part may further include other elements, not excluding the other elements. In addition, terms such as "... er/or" "module", and the like described in the disclosure mean a unit for processing at least one function or operation, and the "... er/or" and "module" may be implemented by hardware or software, or may be implemented by a combination of hardware and software.

Hereinafter, embodiments of the disclosure are described in detail with reference to the accompanying drawings such that one of ordinary skill in the art may easily implement the embodiment of the disclosure. However, an embodiment of the disclosure may be implemented in various different forms and is not limited to the embodiments described herein. Also, in the drawings, parts irrelevant to the description are omitted in order to clearly describe embodiments of the disclosure, and like reference numerals designate like elements throughout the disclosure.

An induction heating device may have a plurality of burners, and when several types of vessels are placed on the induction heating device, noise may be generated due to interference in the operating frequencies of each burner. This noise causes auditory discomfort to users of induction heating device and therefore needs to be reduced.

Therefore, according to an embodiment of the disclosure, in an induction heating device including a plurality of burners, when cooking is performed on the plurality of burners, it is beneficial to reduce noise due to a difference in operating frequency of each burner.

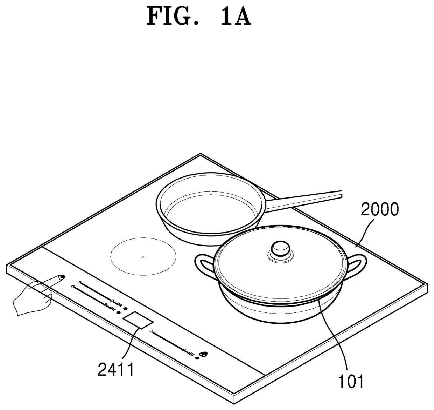

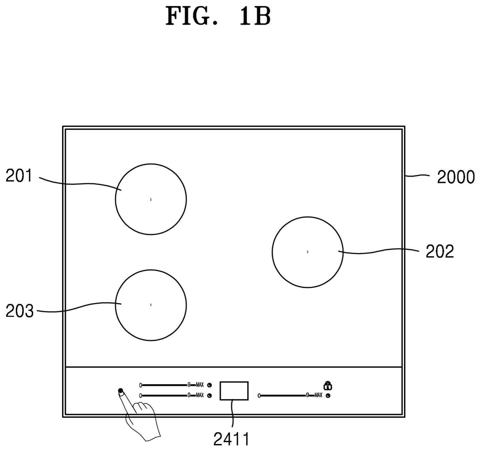

FIG. 1A and FIG. 1B are diagrams for describing an induction heating device 2000 according to an embodiment of the disclosure.

Referring to FIG. 1A and FIG. 1B, the induction heating device 2000 according to an embodiment of the disclosure may include a plurality of burners 201, 202, and 203. In FIG. 1B, the plurality of burners 201, 202, and 203 are circular in shape, and thus may be referred to as a first circular burner 201, a second circular burner 202, a third circular burner 203, respectively. The first circular burner 201 may also be simply referred to as a first burner 201. Hereinafter, the induction heating device 2000 may be simply represented as an induction cooking device or simply a heating device. Not all elements shown in FIG. 1A and FIG. 1B are essential. The induction heating device 2000 may be implemented with more elements than shown, or may be implemented with fewer elements.

A cooking vessel 101 may be a device for heating contents inside the cooking vessel 101. The contents of the cooking vessel 101 may be liquids such as water, tea, coffee, soup, juice, wine, and oil, or solids such as butter, meat, vegetables, bread, and rice, but are not limited thereto.

According to an embodiment of the disclosure, the cooking vessel 101 may wirelessly receive power from the induction heating device 2000 by using electromagnetic induction. Accordingly, the cooking vessel 101 according to an embodiment of the disclosure may not include a power cord connected to a power outlet.

According to an embodiment of the disclosure, a type of cooking vessel 101 wirelessly receiving power from the induction heating device 2000 may vary. The cooking vessel 101 may be a general induction heating (IH) vessel (hereinafter referred to as "IH vessel") including a magnetic material. In the cooking vessel 101, a magnetic field may be induced in the vessel (IH metal) itself.

The cooking vessel 101 may be a general **IH** vessel such as a pot, a frying pan, or a steamer. The cooking vessel 101 may include a cooker device. The cooker device may be a device into which a general IH vessel may be inserted or removed. According to an embodiment of the disclosure, the cooker device may be a device capable of automatically cooking contents according to a recipe. The cooker device may be referred to as a pot, rice cooker, or steamer, depending on the intended use. For example, when an inner pot for cooking rice is inserted into a cooker device, the cooker device may be referred to as a rice cooker. Hereinafter, the cooker device may be defined as a smart pot.

According to an embodiment of the disclosure, when the cooking vessel 101 includes a communication interface, the cooking vessel 101 may communicate with the induction heating device 2000. The communication interface may include a short-range communication unit, a long-range communication unit, etc. The short-range wireless communication interface may include a Bluetooth communication unit, a Bluetooth Low Energy (BLE) communication unit, a near field communication interface (NFC), a Wi-Fi local area network (WLAN) communication unit, a Zigbee communication unit, an Infrared Data Association (IrDA) communication unit, a Wi-Fi Direct (WFD) communication unit, an ultra wideband (UWB) communication unit, or an Ant+ communication unit, but is not limited thereto. The long-range communication unit may be used to communicate with a server device when the cooking device is remotely controlled by the server device in an Internet of things (IoT) environment. The long-range communication unit may include the Internet, a computer network (LAN or wide area network (WAN)), or a mobile communication unit. The mobile communication unit may include a 3G module, a 4G module, a 5G module, a Long-Term Evolution (LTE) module, narrowband IoT (NB-IoT) module, a Long-Term Evolution Machine Type Communication (LTE-M) module, or the like, but is not limited thereto.

According to an embodiment of the disclosure, the cooking vessel 101 may transmit information to a server device (not shown) through the induction heating device 2000. For example, the cooking vessel 101 may transmit information obtained from the cooking vessel 101 (e.g., temperature information of contents, or the like) to the induction heating device 2000 through short-range wireless communication (e.g., Bluetooth, BLE, or the like). In this case, the induction heating device 2000 may connect to the server device by using a WLAN communication unit or long-range communication unit (e.g., the Internet) and transmit the information obtained from the cooking vessel 101 to the server device. Meanwhile, the server device may provide, to the user, the information obtained from the cooking vessel 101 received from the induction heating device 2000 through a mobile terminal (not shown) connected to the server device. According to an embodiment of the disclosure, the induction heating device 2000 may directly transmit the information obtained from the cooking vessel 101 to a mobile terminal of a user through device to device (D2D) communication (e.g., Wi-Fi Direct (WFD) communication or BLE communication).

Meanwhile, according to an embodiment of the disclosure, the cooking vessel 101 may transmit information about the cooking vessel 101 (e.g., temperature information of contents) directly to the server device through a communication interface (e.g., a WLAN communication unit). In addition, the cooking vessel 101 may directly transmit the information (e.g., the temperature information of contents, or the like) obtained from the cooking vessel 101 to the mobile terminal of the user through short-range wireless communication (e.g., Bluetooth, BLE, or the like) or D2D communication (e.g., WFD communication).

The induction heating device 2000 according to an embodiment of the disclosure may be a device that wirelessly transmits power to a heated object (e.g., the cooking vessel 101) positioned on a top plate by using electromagnetic induction. The induction heating device 2000 may include a working coil that generates a magnetic field for inductively heating the cooking vessel 101.

Generating a magnetic field by a working coil may refer to transmitting power by using a magnetic field induced in an IH metal (e.g., iron) by magnetic induction. For example, the induction heating device 2000 form a magnetic field by flowing current through a working coil so that an eddy current is generated in the cooking vessel 101.

According to an embodiment of the disclosure, the induction heating device 2000 may include a plurality of working coils. For example, when the top plate of the induction heating device 2000 includes a plurality of cooking zones, the induction heating device 2000 may include a plurality of working coils corresponding to the plurality of cooking zones, respectively. In addition, the induction heating device 2000 may include a high-power cooking zone having a first working coil provided on the inside thereof and a second working coil provided on the outside thereof. The high-power cooking zone may include three or more working coils.

The top plate of the induction heating device 2000 according to an embodiment of the disclosure may include reinforced glass such as ceramic glass so as not to be easily broken. In addition, a guide mark may be provided on the top plate of the induction heating device 2000 to guide a cooking zone where the cooking vessel 101 should be positioned.

The induction heating device 2000 according to an embodiment of the disclosure may detect that the cooking vessel 101 including a magnetic material is placed on the top plate thereof. For example, the induction heating device 2000 may detect that the cooking vessel 101 is positioned on the top plate of the induction heating device 2000, on the basis of a change in the current (inductance) of the working coil due to approach of the cooking vessel 101.

According to an embodiment of the disclosure, the induction heating device 2000 may include a communication interface for communicating with an external device or devices. For example, the induction heating device 2000 may communicate with the cooking vessel 101 or the server device through the communication interface. The communication interface may include a short-range communication unit (e.g., a near-field communication (NFC) communication unit, a Bluetooth communication unit, a BLE communication unit, or the like), a mobile communication unit, and the like.

According to an embodiment of the disclosure, the induction heating device 2000 may detect the cooking vessel 101 positioned on the top plate through a communication interface. For example, the induction heating device 2000 may detect the cooking vessel 101 by receiving, by using short-range wireless communication (e.g., a BLE mesh network or Bluetooth) a packet transmitted from the cooking vessel 101 positioned on the top plate.

According to an embodiment of the disclosure, the induction heating device 2000 may display information related to the cooking vessel 101 through a user interface. For example, when the cooking vessel 101 is detected, the induction heating device 2000 may display identification information and position information of the cooking vessel 101 on a display unit included in a user interface 2400.

Referring to FIG. 1A, when the user places the cooking vessel 101 (e.g., a pot) on the top plate of the induction heating device 2000, the induction heating device 2000 may provide the user with identification information (e.g., a pot) of the cooking vessel 101 and position information (e.g., positioned on the right burner) on a display 2411 as an output interface.

Referring to FIG. 1B, the induction heating device 2000 may include the plurality of burners 201, 202, and 203 and thus may heat a plurality of cooking vessels simultaneously. When the induction heating device 2000 simultaneously heats the plurality of cooking vessels, a working coil corresponding to each burner operates. In this case, when operating frequencies of the working coils are different from each other, interference is generated, and noise in the audible range that may be heard by the user of the induction heating device 2000 may also be generated. Accordingly, it is beneficial to reduce interference noise generated when a plurality of cooking devices are heated through the plurality of burners 201, 202, and 203.

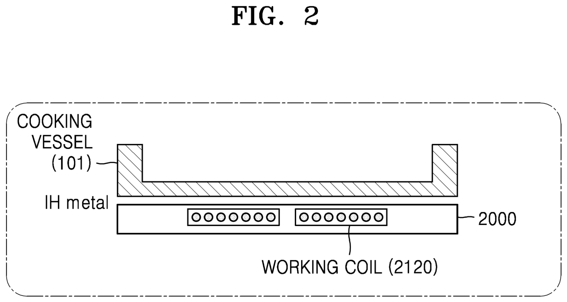

FIG. 2 is a cross-sectional view of the induction heating device 2000 on which the cooking vessel 101 is placed, according to an embodiment of the disclosure.

Referring to FIG. 2, the cooking vessel 101 may include a magnetic material (e.g., **IH** metal) in which a magnetic

EP 4 730 916 A1

The cooking vessel 101 may be inductively heated by the induction heating device 2000 and may be a vessel of various shapes including a magnetic material. Induction heating (IH) is a method of heating IH metals by using electromagnetic induction. For example, when direct current is supplied to a working coil 2120 of the induction heating device 2000, a time-varying magnetic field may be induced inside the working coil 2120. The magnetic field generated by the working coil 2120 may pass through a bottom of the cooking vessel 101. When the time-varying magnetic field passes through an IH metal (e.g., iron, steel, nickel, or various types of alloys) included in the bottom of the cooking vessel 101, current that rotates about the magnetic field is generated in the IH metal. A rotating current is referred to as an eddy current, and a phenomenon in which current is induced by a time-varying magnetic field is referred to as an electromagnetic induction phenomenon. For the cooking vessel 101, heat is generated at the bottom of the cooking vessel 101 due to eddy current and resistance of IH metal (e.g., iron). Contents of the cooking vessel 101 may be heated by the heat generated at this time.

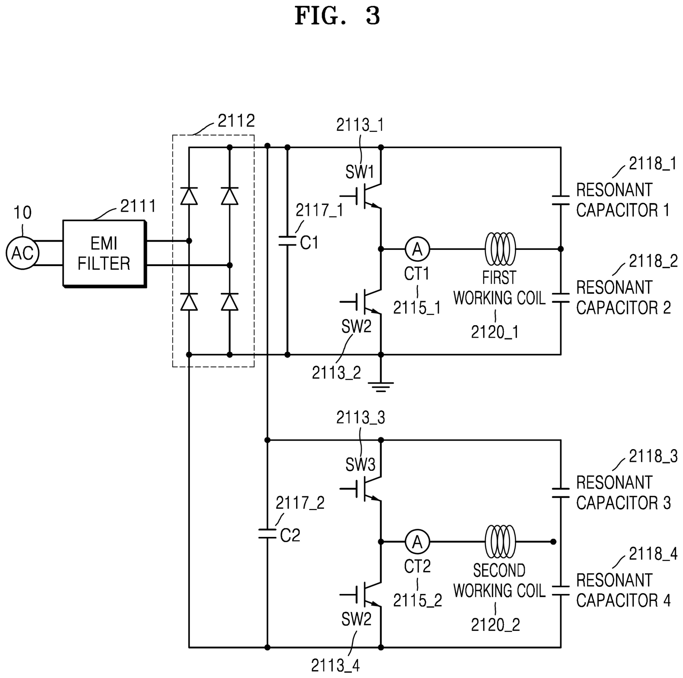

FIG. 3 is an inverter circuit diagram of an induction heating device for operating a plurality of working coils, according to an embodiment of the disclosure.

Referring to FIG. 3, an input power source 10 is an alternating current (AC) power source, and an AC voltage from the AC power source may pass through an electromagnetic interference (EMI) filter 2111 and may be rectified by a rectifier circuit 2112. The rectifier circuit 2112 is an element for converting AC voltage to DC voltage. A diode may be used, but a thyristor or other type of switching element may be used. When AC voltage is converted to DC voltage via the rectifier circuit 2112, the DC voltage may be smoothed by DC link capacitors 2117_1 and 2117_2.

In FIG. 3, two resonant circuits are shown under the assumption that two working coils 2120_1 and 2120_2 are present. However, when there are three burners and three working coils are required, more resonant circuits may be added.

A DC voltage smoothed by a DC link capacitor 2117_1 may generate a magnetic field in a first working coil 2120_1 by resonance between resonant capacitor 1 2118_1 and resonant capacitor 2 2118_2 through a switching operation of two switching elements SW1 2113_1 and SW2 2113_2. The magnetic field generated in the first working coil 2120_1 may generate an eddy current in an IH cooking vessel placed on top of the first working coil 2120_1, thereby heating contents of the cooking vessel. CT1 2115_1 is a current detection unit for detecting current flowing through the first working coil 2120_1. In an embodiment of the disclosure, the first working coil 2120_1 may be a working coil for a first burner, having a circular shape.

Similarly, a DC voltage smoothed by a DC link capacitor 2117_2 at the bottom may generate a magnetic field in a second working coil 2120_2 by resonance between the second working coil 2120_2 and resonant capacitor 3 2118_3 and resonant capacitor 4 2118_4 through a switching operation of two switching elements SW3 2113_3 and SW4 2113_4. The magnetic field generated in the second working coil 2120_2 may generate an eddy current in an IH cooking vessel placed on top of the second working coil 2120_2, thereby heating contents of the cooking vessel. CT2 2115_2 is a current detection unit for detecting current flowing through the second working coil 2120_2. In an embodiment of the disclosure, the second working coil 2120_2 may be a working coil for a second burner, having a rectangular shape.

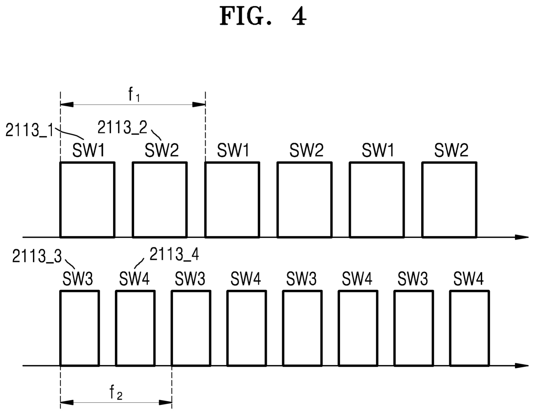

FIG. 4 is a switching diagram of an inverter circuit of an induction heating device according to an embodiment of the disclosure.

In FIG. 4, SW1 2113_1, SW2 2113_2, SW3 2113_3, and SW4 2113_4 may correspond to SW1 2113_1, SW2 2113_2, SW3 2113_3, and SW4 2113_4 of the circuit diagram according to FIG. 3, respectively.

Referring to FIG. 4, on-off of SW1 2113_1 and SW2 2113_2 is repeated at a constant frequency ($f_1$), and on-duty of each of SW1 2113_1 and SW2 2113_2 is the same. Similarly, on-off of SW3 2113_3 and SW4 2113_4 is repeated at a constant frequency ($f_2$), and on-duty of each of SW1 2113_1 and SW2 2113_2 is the same. When switching frequency of SW1 2113_1 and SW2 2113_2 and switching frequency of SW3 2113_3 and SW4 2113_4 are different, it means that an output from the first working coil 2120_1 where resonance occurs due to the switching of SW1 2113_1 and SW2 2113_2 and an output from the second working coil 2120_2 where resonance occurs due to the switching of SW3 2113_3 and SW4 2113_4 are different from each other. Accordingly, if the outputs from the first working coil 2120_1 and the second working coil 2120_2 are different when a burner corresponding to the first working coil 2120_1 is the first burner 201 of FIG. 1 and a burner corresponding to the second working coil 2120_2 is a second burner 203, it means that outputs from the first burner 201 and the second burner 203 are different from each other. In actual cooking, there are frequent cases where cooking must be simultaneously performed in the first burner 201 and the second burner 203 with different outputs.

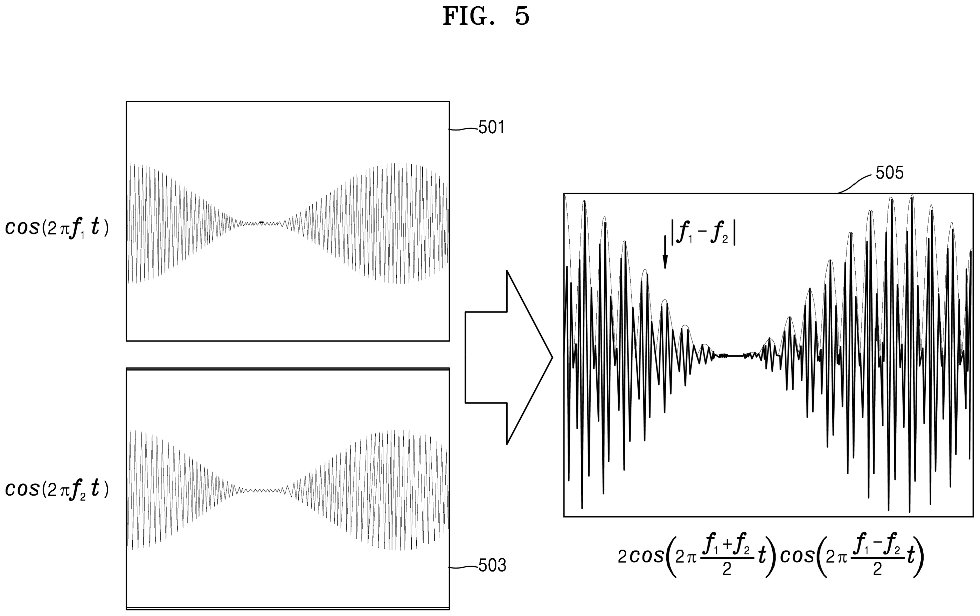

In FIG. 4, it can be seen that the switching frequency of SW3 2113_3 and SW4 2113_4 are different from the switching frequency of SW1 2113_1 and SW2 2113_2. When the switching frequency of SW1 2113_1 and SW2 2113_2 is $f_1$ and the switching frequency of SW3 2113_3 and SW4 2113_4 is $f_2$, FIG. 5 shows a waveform of resonance current detected in each of the first working coil 2120_1 and the second working coil 2120_2.

FIG. 5 is a waveform diagram of resonant current detected in a plurality of working coils according to an embodiment of the disclosure.

Referring to FIG. 5, a waveform diagram 501 is a waveform diagram of resonant current detected in the first

6

working coil 2120_1, and a frequency of the resonant current (resonant frequency or operating frequency) is $f_1$. A waveform diagram 503 is a waveform diagram of resonant current detected in the second working coil 2120_2, and a frequency of the resonant current (resonant frequency or operating frequency) is $f_2$.

When the resonant frequency $f_1$ of the first working coil 2120_1 and the resonant frequency $f_2$ of the second working coil 2120_2 are different from each other, interference noise due to a third frequency corresponding to the difference between the two frequencies $(f_1 - f_2)$ may be generated, as shown in 505 of FIG. 5. When the difference between the two frequencies $|f_1 - f_2|$ falls within the audible band, the user of the induction heating device 2000 may perceive noise. The perceived noise may cause auditory discomfort to the user. Accordingly, it is necessary to reduce the interference noise generated between these working coils (or between burners).

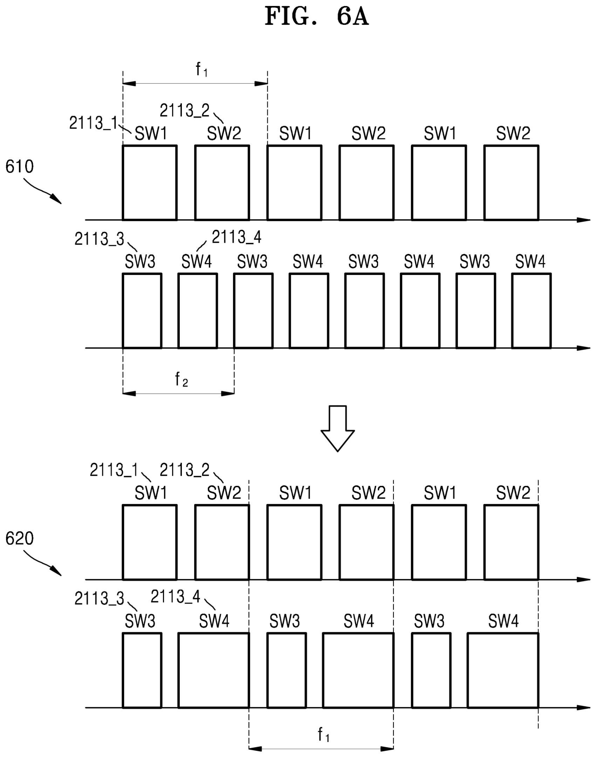

FIG. 6A is a diagram illustrating asymmetric control switching in an inverter circuit of an induction heating device, according to an embodiment of the disclosure.

Referring to FIG. 6A, at a top 610, the on-off of SW1 2113_1 and SW2 2113_2 is repeated at the constant frequency $(f_1)$ and the on-duty of each of SW1 2113_1 and SW2 2113_2 is the same, as in FIG. 4 described above. Similarly, the on-off of SW3 2113_3 and SW4 2113_4 is repeated at the constant frequency $(f_2)$, and the on-duty of each of SW1 2113_1 and SW2 2113_2 is the same. The switching frequency $(f_2)$ of SW3 2113_3 and SW4 2113_4 is higher than the switching frequency $(f_1)$ of SW1 2113_1 and SW2 2113_2. When there is a difference in resonant frequency (operating frequency) as described above, interference noise may be generated. According to an embodiment of the disclosure, in order to eliminate interference noise, so-called "asymmetric control" may be performed by making the switching frequency of SW3 2113_3 and SW4 2113_4 $f_1$ and making the on-duty of SW4 2113_4 different from the on-duty of SW3 2113_3, as in the bottom 620 of FIG. 6A. When switching control that makes the on-duties of SW3 2113_3 and SW4 2113_4 different is referred to as "asymmetric control", switching control that makes the on-duties of SW3 2113_3 and SW4 2113_4 the same may be referred to as "symmetric control".

In an embodiment of the disclosure, lowering the switching frequency of SW3 2113_3 and SW4 2113_4 to $f_1$, as in 620, may increase the output at the burner compared to when switching to $f_2$. However, when so-called "asymmetric control" is performed, where the on-duty of SW4 2113_4 is different from the on-duty of SW3 2113_3, the output decreases compared to "symmetric control". Accordingly, the induction heating device 2000 may make an output by the second working coil 2120_2 during symmetrical control equal to an output of the second working coil 2120_2 during asymmetric control with the switching frequency of SW3 2113_3 and SW4 2113_4 set to $f_1$. In other words, when the on-duties of SW3 2113_3 and SW4 2113_4 are appropriately adjusted while changing the switching frequency of SW3 2113_3 and SW4 2113_4 to $f_1$, the output of the second working coil 2120_2 may be controlled to be equal to the output by the second working coil 2120_2 during symmetrical control where the switching frequency of SW3 2113_3 and sW4 2113_4 is $f_2$. The symmetrical control and asymmetric control of switching elements SW3 2113_3 and SW4 2113_4 may be performed by a processor of the induction heating device 2000.

In an embodiment of the disclosure, the induction heating device 2000 may match the frequency of a working coil operating at a higher switching frequency (or operating frequency of the working coil) and performing asymmetric control toward the frequency of a working coil operating at a relatively low switching frequency (or operating frequency of the working coil).

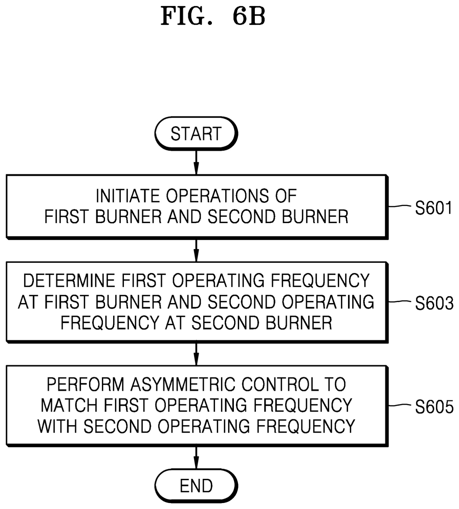

FIG. 6B is a flowchart of asymmetric control by an induction heating device, according to an embodiment of the disclosure.

FIG. 6B is a flowchart showing the asymmetrical control performed by the induction heating device 2000 in FIG. 6A described above.

First, in operation S601, the induction heating device 2000 initiates a heating operation in the first burner 201 and a second burner 204.

In operation S603, in response to an initiation command for the second burner 203, the induction heating device 2000 may determine a first operating frequency in the first burner 201 and a second operating frequency in the second burner 203. When an output at the first burner 201 is determined, a reference frequency for pulse width modulation (PWM) switching SW1 2113_1 and SW2 2113_2 according to the output is determined, and thus the induction heating device 2000 may detect the first operating frequency according to the determined reference frequency. Similarly, when an output at the second burner 203 is determined by the user, a second operating frequency of the second working coil 2120_2 of the second burner 203 corresponding to the determined output may be determined. The second operating frequency may be referred to as the switching frequency of SW3 2113_3 and SW4 2113_4.

In operation S605, when the first operating frequency and the second operating frequency are different from each other, the induction heating device 2000 may match the second operating frequency of the second working coil 2120_2 with the first operating frequency. By matching the second operating frequency with the first operating frequency, interference noise that may occur between the first operating frequency and the second operating frequency may be eliminated.

As the second operating frequency is matched with the first operating frequency, the output at the second operating frequency may vary, and thus, in order to preserve this, according to an embodiment of the disclosure, the on-duties of SW3 2113_3 and SW4 2113_4 performing switching for generating resonance in the second working coil 2120_2 may be changed. In this case, in an embodiment of the disclosure, the induction heating device 2000 may maintain the on-duty of SW3 2113_3 the same as before, and change only the on-duty of SW4 2113_4. Conversely, the induction heating device 2000 may maintain the on-duty of SW4 the same as before, and change only the on-duty of SW3 2113_3. In an embodiment of the disclosure, the induction heating device 2000 may change both the on-duty of SW3 2113_3 and the on-duty of SW4 2113_4, but may control such that the output from the second working coil 2120_2 is equal to the output of the second working coil 2120_2 when operated at the second operating frequency.

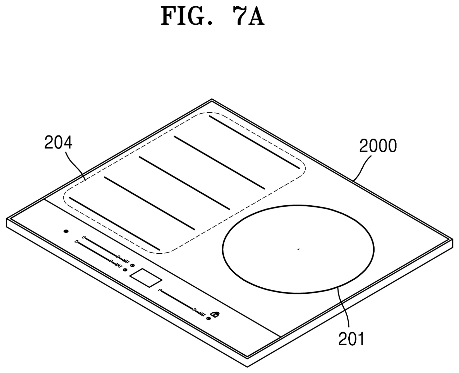

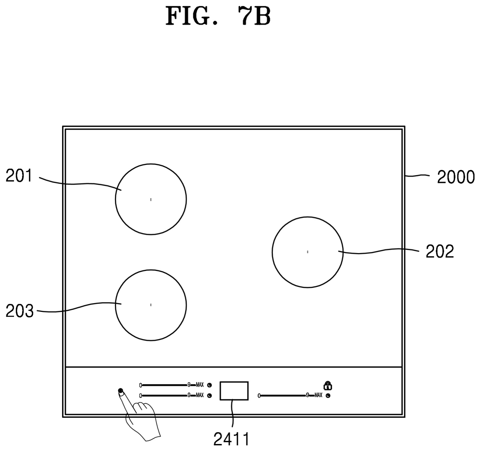

FIG. 7A and FIG. 7B show the induction heating device 2000 that uses a rectangular working coil, according to an embodiment of the disclosure.

Referring to FIG. 7A and FIG. 7B, the induction heating device 2000 according to an embodiment of the disclosure may include the circular first burner 201 operated by the first working coil and a rectangular second burner 204 operated by the second working coil. The first working coil may be a circular working coil, and the second working coil may be a working coil having a rectangular shape or a shape close to rectangle. The rectangle shape of the second burner 204 may be rectangle, and the second working coil at the bottom of the rectangular second burner 204 may include a plurality of rectangular working coils or a plurality of elongated elliptical working coils.

When the second working coil is used for the rectangular second burner 204 in the induction heating device 2000, there is an advantage of eliminating a dead zone when, for example, a rectangular pan is placed thereon. In addition, no matter where on the rectangular second burner 204 the user of the induction heating device 2000 places the cooking vessel, the induction heating device 2000 may recognize the cooking vessel and operate at least some of a plurality of corresponding working coils that are necessary for heating the cooking vessel, thereby heating contents of the cooking vessel.

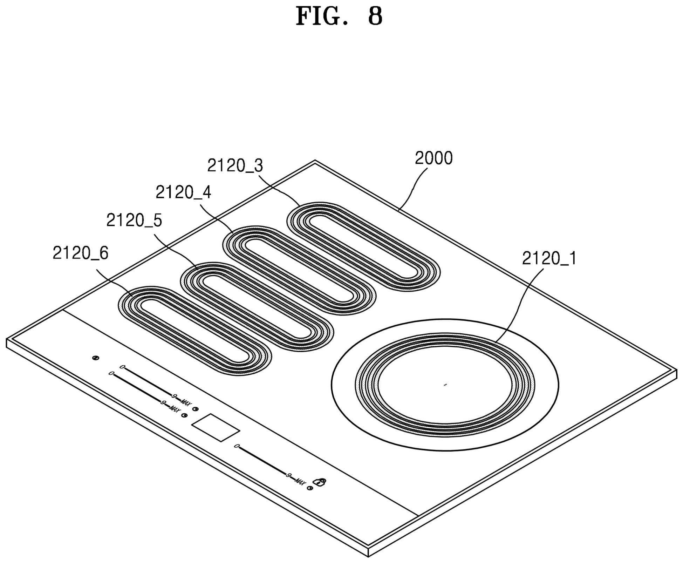

FIG. 8 is a diagram illustrating the induction heating device 2000 together with a working coil, according to an embodiment of the disclosure.

Although not actually visible from the outside, FIG. 8 shows a working coil within the induction heating device 2000 wound to fit the appearance of the induction heating device 2000. As can be seen from FIG. 8, according to an embodiment of the disclosure, four rectangular working coils 2120_3, 2120_4, 2120_5, and 2120_6 corresponding to the rectangular second burner 204 in the induction heating device 2000 are sequentially wound from the top of the induction heating device 2000. The four rectangular working coils 2120_3, 2120_4, 2120_5, and 2120_6 may be second working coils. Obviously, this is only an example, and the number of second working coils 2120_3, 2120_4, 2120_5, and 2120_6 corresponding to the rectangular second burner 204 may be more than four, or may be less than four.

Similar to FIG. 1 described above, a circular working coil corresponding to the circular first burner 201 is wound as the first working coil 2120_1 to fit the first burner 201. Thereafter, herein, the first working coil 2120_1 may be referred to as a circular working coil.

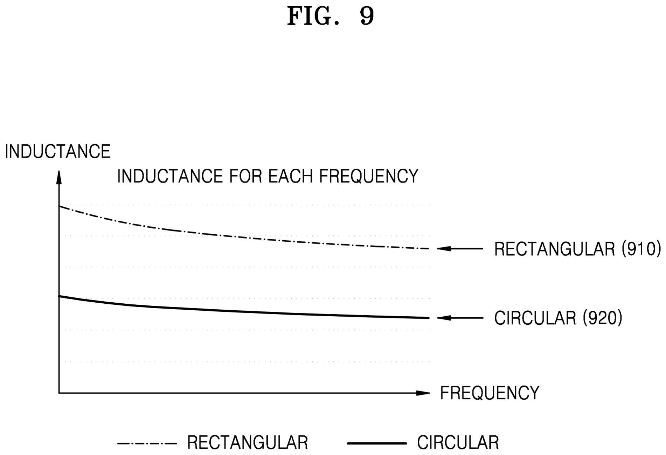

FIG. 9 is a graph showing inductances of a rectangular working coil and a circular working coil according to an embodiment of the disclosure.

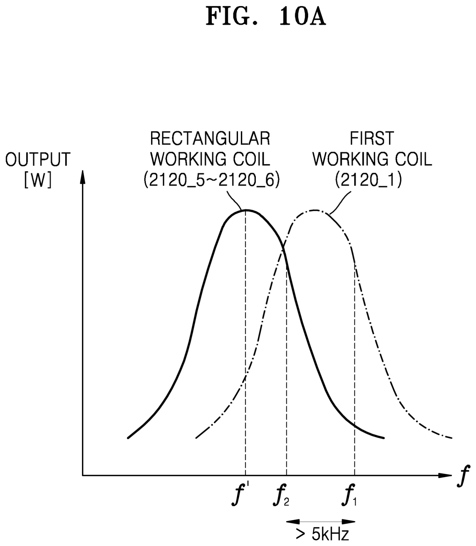

For convenience of description, an embodiment is described in which two bottom rectangular working coils 2120_5 and 2120_6 of the second working coils 2120_3, 2120_4, 2120_5, and 2120_6, which have a rectangular shape, operate, and simultaneously, the circular working coil 2120_1 operates. Although the bottom rectangular working coils 2120_5 and 2120_6 are mainly described, in an embodiment below, the same is applicable to the top rectangular working coils 2120_3 and 2120_4 or the middle rectangular working coils 2120_4 and 2120_5. For FIGS. 9 and 10A only, the bottom rectangular working coils 2120_5 and 2120_6 are referred to as the second working coil, and the circular working coil 2120_1 is referred to as the first working coil.

The second working coils 2120_5 and 2120_6 must be designed to have a high inductance value due to the shape thereof, and the first working coil 2120_1 may be designed to have a relatively low inductance value. This is because when a cooking vessel is placed on a burner in the induction heating device 2000, an equivalent inductance value of a working coil corresponding to the burner decreases, and when the equivalent inductance value of the working coil decreases, an equivalent resistance value of the working coil may increase. In this case, a working coil corresponding to a rectangular burner has a relatively low bonding strength with the cooking vessel compared to a working coil corresponding to a circular burner. Accordingly, even when an inductance value of a working coil corresponding to a circular burner and an inductance of a working coil corresponding to a rectangular burner are equal when no cooking vessel is placed on the burners, an inductance value of the working coil corresponding to the circular burner becomes less than an inductance of the working coil corresponding to the rectangular burner when a cooking vessel is placed on the burners. An example of the above is shown in Table 1 below.

[Table 1]

| Working coil of circular burner | | Working coil of rectangular burner | |
| --- | --- | --- | --- |
| Original inductance value of working coil | 80 uH | Original inductance value of working coil | 80 uH |

(continued)

| Working coil of circular burner | | Working coil of rectangular burner | |
|---|---|---|---|
| Inductance value of working coil when cooking vessel is placed | 40 uH | Inductance value of working coil when cooking vessel is placed | 70 uH |

Here, as in the case of circular burner, an equivalent resistance value of a working coil increases as an equivalent inductance value of the working coil significantly decreases. However, in the case of rectangular burner, the equivalent resistance value of the working coil does not increase significantly because an amount by which the inductance value of the working coil decreases is small when the cooking vessel is placed. Accordingly, in order to obtain the same output (P = $I^2R$ (equivalent resistance value) in the induction heating device 2000, a current value in the rectangular burner must be increased. Accordingly, in order to increase the equivalent resistance value, the inductance of the rectangular burner must be relatively increased.

Accordingly, referring to FIG. 9, it can be seen from the graph that an inductance 910 of the bottom second working coil 2120_5 and 2120_6 has a greater value than an inductance 920 of the first working coil 2120_1. When the inductance of the second working coils 2120_5 and 2120_6 is higher than the inductance of the first working coil 2120_1, it means that a resonant frequency at which the second working coils 2120_5 and 2120_6 resonate with a resonant capacitor is lower than a resonant frequency at which the first working coil 2120_1 resonates with a resonant capacitor. This is because the resonant frequency is derived by the formula shown below.

$$f \ (\text{resonant frequency}) = \frac{1}{2\pi\sqrt{LC}} \ \dots \ \text{Mathematical Formula 1}$$

Accordingly, according to Mathematical Formula 1, an operating frequency ($f_2$) during maximum output of the second working coils 2120_5 and 2120_6 becomes less than an operating frequency ($f_1$) during maximum output of the first working coil 2120_1.

FIG. 10A is a graph showing a resonant frequency of each working coil according to an embodiment of the disclosure.

FIG. 10A is a graph showing an output according to an operating frequency for each burner (working coil), according to Mathematical Formula 1. According to FIG. 10A, it can be seen that the operating frequency ($f_2$) during maximum output of the second working coils 2120_5 and 2120_6 is less than the operating frequency ($f_1$) during maximum output by first working coil 2120_1 having a circular shape. In FIG. 10A, the induction heating device 2000 may be controlled such that the maximum output of the rectangular second burner 204 occurs, for example, at point $f_2$ rather than point f'. In other words, the point at which the second working coils 2120_5 and 2120_6 may produce maximum output is f', but in this case, the induction heating device 2000 may become unstable, and thus the induction heating device 2000 is usually set to produce maximum output for each burner at point $f_2$, which is slightly to the right of point f'.

According to FIG. 10A, when the second working coils 2120_5 and 2120_6 perform a heating operation, the operating frequency thereof has a lower value than the operating frequency of the first working coil 2120_1.

When the difference ($f_1$ - $f_2$) between the operating frequency of the first working coil 2120_1 and the operating frequency of the second working coils 2120_5 and 2120_6 is less than 5 kilohertz (kHz), interference noise may occur during heating operation in the two burners. Accordingly, in an embodiment of the disclosure, when designing inductance of the second working coils 2120_5 and 2120_6 and inductance of the first working coil 2120_1, the working coil - the inductance of the working coil - may be designed such that the difference ($f_1$ - $f_2$), between the operating frequency when the second working coils 2120_5 and 2120_6 perform a heating operation and the operating frequency when the first working coil 2120_1 performs a heating operation, is greater than 5 kHz. Although a frequency difference of 5 kHz may not normally cause auditory discomfort to the average user, the two working coils - inductance of working coils - may be designed so that the difference between the two operating frequencies (f1 - f2) is preferably between about 5 kHz to about 10 kHz, or even greater than 10 kHz, to make it more difficult for the user to perceive the interference noise.

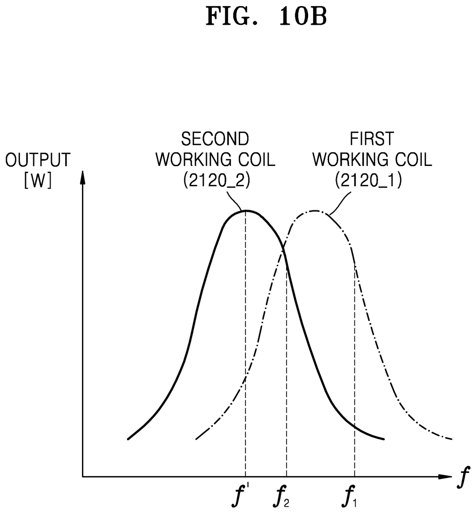

FIG. 10B is a graph showing a resonant frequency of each working coil according to an embodiment of the disclosure.

As shown in FIG. 10A, it can be seen that the difference in output between burners according to frequency band occurs because the bottom rectangular working coils 2120_5 and 2120_6 normally have a greater inductance value than the circular working coil 2120_1.

However, even in the induction heating device 2000 including only circular burners as in FIG. 1, there may be a difference in inductance value for each burner. For example, even when inductance of the first working coil 2120_1 corresponding to the first burner 201 (first circular burner 201) is less than inductance of the second working coil 2120_2 corresponding to the second circular burner 202, there may be a difference in output for each burner according to frequency band as in FIG. 10B may occur.

According to FIG. 10B, it can be seen that the operating frequency ($f_2$) during maximum output of the second working coil 2120_2 is less than the operating frequency ($f_1$) during maximum output by first working coil 2120_1. In FIG. 10B, the induction heating device 2000 may be controlled such that the maximum output of the second circular burner 202 occurs, for example, at point $f_2$ rather than point f'. In other words, the point at which the second working coil 2120_2 may produce maximum output is f', but in this case, the induction heating device 2000 may become unstable, and thus the induction heating device 2000 is usually set to produce maximum output for each burner at point $f_2$, which is slightly to the right of point f.

According to FIG. 10B, when the second working coil 2120_2 performs a heating operation, the operating frequency thereof normally has a lower value than the operating frequency of the first working coil 2120_1.

When the inductance values of the first working coil 2120_1 and the second working coil 2120_2 are not equal - or the difference is very small - and a difference in inductance value between two working coils, interference noise may occur when the two working coils operate, as shown in FIG. 10B. Accordingly, in order to eliminate the interference noise, when designing the inductance of the first working coil 2120_1 and the inductance of the second working coil 2120_2, the two working coils - inductances of the working coils - may be designed such that a difference ($|f_1 - f_2|$) between an operating frequency when the first working coil 2120_1 performs a heating operation and an operating frequency when the second working coil 2120_2 performs a heating operation is greater than 5 kHz. Although a frequency difference of 5 kHz may not normally cause auditory discomfort to the average user, the two working coils 2120_1 and 2120_2 - inductances of working coils - may be designed so that the difference between the two operating frequencies ($|f1 - f2|$) is preferably between about 5 kHz to about 10 kHz, or even greater than 10 kHz, to make it more difficult for the user to perceive the noise. In an embodiment of the disclosure, a first burner heated by the first working coil 2120_1 and a second burner heated by the second working coil 2120_2 may both be circular. In an embodiment of the disclosure, the first burner heated by the first working coil 2120_1 may be circular, and the second burner heated by the second working coil 2120_2 may be rectangular.

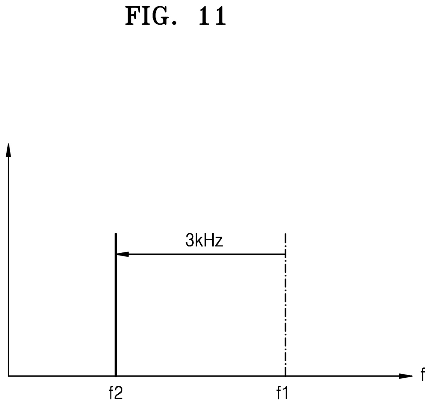

FIG. 11 is a graph showing a frequency difference for each burner, according to an embodiment of the disclosure.

A difference in operating frequency and a noise reduction method are described with reference to FIG. 11.

It is described above with reference to FIG. 5 that noise may occur due to a difference in operating frequency for each burner in the induction heating device 2000. There are several factors that may cause differences in operating frequency for each burner, but when the user sets different outputs for each burner, the operating frequency may vary. In addition, as discussed with reference to FIGS. 10A and 10B, when an inductance of a working coil for each burner is different from each other, the operating frequency may be different. In addition, when the user-set output for each burner is different for each burner and the inductances of the working coils are different, the operating frequency may be different. FIG. 11 is a diagram showing that the operating frequencies of two of a plurality of burners of the induction heating device 2000 are different ($f_2$ and $f_1$) due to at least one of the factors described above.

When the operating frequencies of two of the plurality of burners are different from each other ($f_2$ and $f_1$) and a difference ($|f_1 - f_2|$) between the two operating frequencies falls within the audible range, the user of the induction heating device 2000 may perceive noise and experience auditory discomfort. Accordingly, in an embodiment of the disclosure, when the difference ($|f_1 - f_2|$) in operating frequency of two of the plurality of burners is 3 kHz or less, the induction heating device 2000 may perform asymmetric control while allowing a relatively high operation frequency $f_1$ to an operating frequency $f_2$ ($f_1$ -> $f_2$), thereby controlling the output of the burners to remain the same as when the burners operate at the operating frequency $f_1$. Although this may vary, a maximum frequency that may be lowered by asymmetric control is typically around 3 kHz.

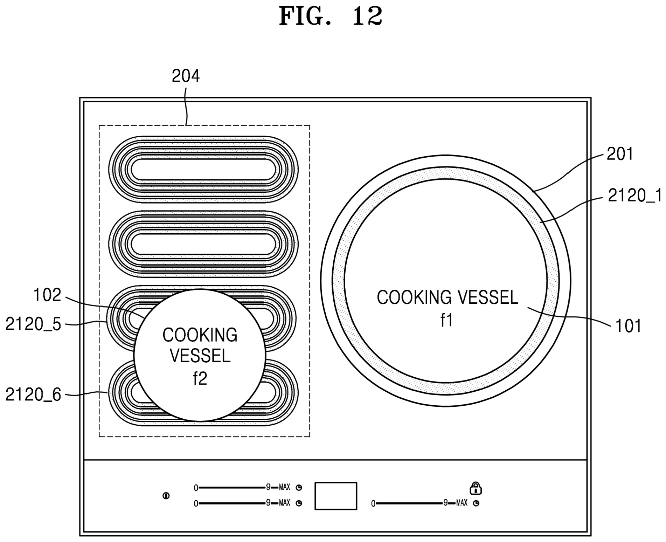

FIG. 12 is a diagram showing a cooking vessel placed and heated on the induction heating device 2000, according to an embodiment of the disclosure.

Referring to FIG. 12, the induction heating device 2000 has the second burner 204 having a rectangular shape and the first burner 201 having a circular shape.

Inductances of the bottom rectangular working coils 2120_5 and 2120_6 corresponding to the bottom of the rectangular second burner 204 may typically have a greater value than an inductance of the circular working coil 2120_1 corresponding to the first burner 201. Accordingly, when designing the inductances of the bottom rectangular working coils 2120_5 and 2120_6 and the inductance of the circular working coil 2120_1 to eliminate interference noise, it is described above with reference to FIG. 10A that the two working coils may be designed such that the difference ($f_1 - f_2$) in operating frequency between when the bottom rectangular working coils 2120_5 and 2120_6 perform a heating operation and when the circular working coil 2120_1 performs a heating operation is greater than a predetermined frequency value - e.g., 5 kHz or more or about 5 kHz to about 10 kHz.

In addition, it is described above with reference to FIG. 10B that the two working coils may be designed such that the difference ($|f_1 - f_2|$) in operating frequency between the circular first working coil 2120_1 and the circular second working coil 2120_2 is also greater than 5 kHz.

In FIG. 12, it is described a case in which magnetic permeability of a cooking vessel 102 placed on the rectangular second burner 204 corresponding to the bottom rectangular working coils 2120_5 and 2120_6 is less than magnetic permeability of the cooking vessel 101 placed on the first burner 201 corresponding to the first working coil 2120_1.

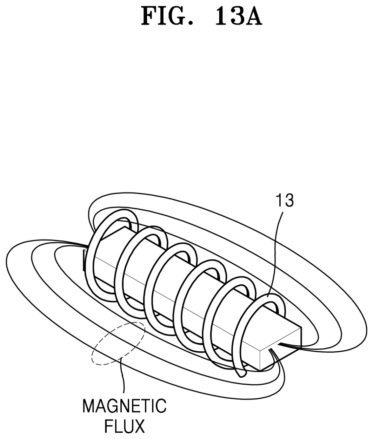

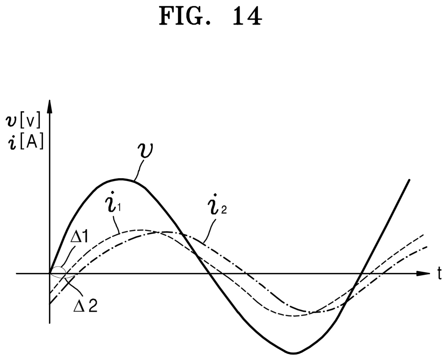

A lower magnetic permeability of a cooking vessel means a higher value of inductance as seen from the working coil. This is described in greater detail with reference to FIGS. 13A to 13D and 14.

FIG. 13A is a diagram for showing a relationship between coil turns and a magnetic flux.

Referring to FIG. 13A, when current flows through a coil 13, a magnetic flux is formed therearound. Here, an inductance of the coil 13 is an inductance corresponding to an amount of magnetic flux flowing in as much as it flows out as current flows through the coil 13. Therefore, a large inductance means that there are many magnetic lines of force. In this case, when a magnetic material with magnetic permeability approaches, the magnetic material absorbs these magnetic lines of force. The permeability is a value that indicates how much magnetic flux that may be absorbed. For example, the magnetic permeability of a small cooking vessel may be lower than that of a relatively large cooking vessel, and thus the small cooking vessel absorbs less magnetic flux. Less flux absorption means higher inductance value. On the other hand, a cooking vessel with high magnetic permeability absorbs a lot of magnetic flux, and thus the inductance value decreases.

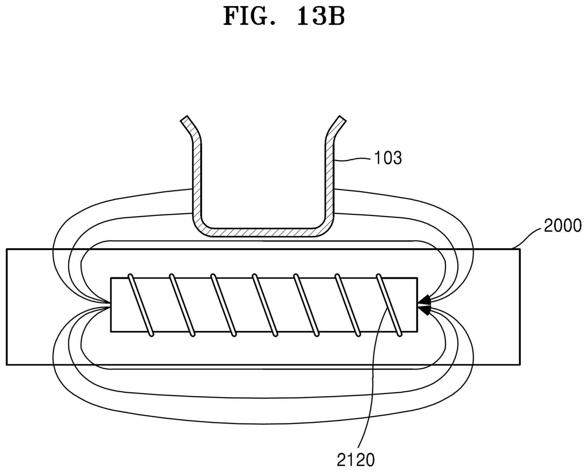

FIG. 13B is a diagram showing a small cooking vessel placed on a working coil of an induction heating device, according to an embodiment of the disclosure.

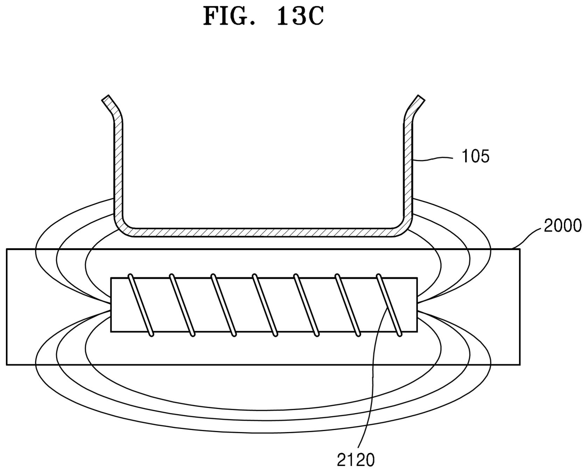

FIG. 13C is a diagram showing a large cooking vessel placed on a working coil of an induction heating device, according to an embodiment of the disclosure.

A relatively large cooking vessel 105 absorbs more magnetic flux (magnetic lines of force) generated by a working coil than a small cooking vessel 103. This is because the magnetic permeability of the large cooking vessel 105 is greater than the magnetic permeability of the small cooking vessel 103. However, this is only an example, and when the magnetic material of the small cooking vessel 103 itself has a high permeability, the inductance value may be small even when the cooking vessel 103 is small.

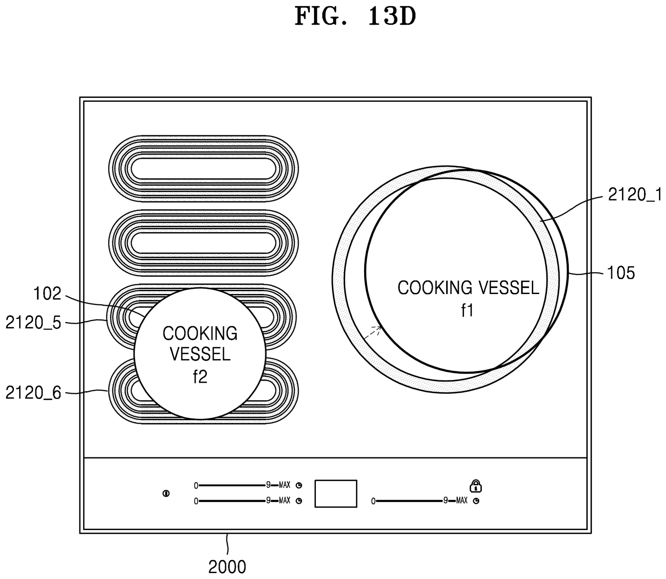

FIG. 13D is a diagram showing a cooking vessel misaligned on a burner of an induction heating device, according to an embodiment of the disclosure.

When the cooking vessel is placed misaligned on a burner of the induction heating device 2000, this means that a center point of the cooking vessel and a center point of the burner do not coincide with each other. It may further mean that part of the cooking vessel extends asymmetrically beyond circular boundaries of the burner.

Apart from magnetic permeability, the inductance value may also vary depending on a position of the cooking vessel. According to FIG. 13D, even when the cooking vessel 105 of the same magnetic permeability is placed on the working coil 2120 - the burner corresponding to the working coil 2120, if the cooking vessel 105 is not placed exactly on the burner and is misaligned, an effect of lowering the magnetic permeability occurs, which means that the inductance in the working coil of the corresponding burner increases. Accordingly, in FIG. 13D, the cooking vessel 105 is positioned offset from the center of the working coil 2120 compared to a case where the cooking vessel 105 is positioned to match a shape of the working coil 2120 - the burner corresponding to the working coil 2120 - and thus the inductance in this case may be relatively greater compared to the case where the cooking vessel 105 is positioned to match the shape of the working coil 2120.

As shown in FIGS. 13A to 13D above, when the inductance increases due to the cooking vessel, the current is delayed further compared to the voltage applied to the working coil 2120, and thus a phase difference between the voltage and current may further increase. FIG. 14 shows this graphically.

FIG. 14 is a graph showing phases of voltage and current of a working coil according to an embodiment of the disclosure.

According to FIG. 14, a voltage v and current $i_1$ and $i_2$ of the working coil are shown. The induction heating device 2000 may detect the voltage and current of the working coil through a voltage sensor and a current sensor CT, respectively, and a processor 2200 of the induction heating device 2000 may detect a phase difference ($\triangle 1$ and $\triangle 2$) between the voltage and current based on the detected voltage and current.

It is assumed that the magnetic permeability of cooking vessel 1 placed on the burner is $\mu 1$, and the current of the working coil is $i_1$ when the induction heating device 2000 heats cooking vessel 1, the magnetic permeability of cooking vessel 2 is $\mu 2$ ($\mu 1 > \mu 2$), and the current of the working coil is $i_2$ when the induction heating device 2000 heats cooking vessel 2. In this case, when the induction heating device 2000 heats cooking vessel 2, the inductance increases compared to when heating cooking vessel 1 due to magnetic permeability, and thus the current $i_2$ delay ($\triangle 2$) of the working coil heating cooking vessel 2 may increase compared to the current $i_1$ delay ($\triangle 1$) with respect to the voltage v when heating cooking vessel 1. The current delay ($\triangle 1$ and $\triangle 2$) may be described as the phase difference between voltage and current. Therefore, the actual power of the burner is $V*I*\cos\theta$ (V is the rms value of v, and I is the rms value of $i_1$ and $i_2$). In this case, $V*I*\cos(\triangle 1)$ output is generated in cooking vessel 1, and $V*I*\cos(\triangle 2)$ output is generated for cooking vessel 2, and $V*I*\cos(\triangle 1) > V*I*\cos(\triangle 2)$. In order to maintain the same output as in cooking vessel 1 for cooking vessel 2, which has a relatively large inductance, the current must be increased instead of the voltage being fixed. In order to increase the current, the operating frequency of the working coil must be lowered. When the operating frequency is continuously lowered, the current will increase, but the current cannot be increased more than a current limit according to the specifications of the working coil or induction heating device 2000. Thus, there is a limit to lowering the operating frequency. For cooking vessels with low magnetic permeability, it is therefore necessary to increase the overall operating frequency. For example, in the case of cooking vessel 1 with high magnetic permeability, the working coil may be operated at an operating frequency of 25 kHz, but a cooking vessel with low magnetic permeability needs to be operated at a relatively high operating frequency, for example, 27 kHz. When using a cooking vessel with low magnetic permeability like the above, noise may occur again because the operating frequency is changed while the difference between the operating frequencies of the two burners is more than 5 kHz due to the inductance design to eliminate interference noise.

In other words, it is assumed that the inductances of the bottom rectangular working coils 2120_5 and 2120_6 are designed such that the operating frequency of the bottom rectangular working coil 2120_5 and 2120_6 operates at $f_2 = 25$ kHz, and the first working coil 2120_1 is designed to operate at $f_1 = 31$ kHz. In this case, because a cooking vessel with low magnetic permeability is placed on the bottom rectangular working coils 2120_5 and 2120_6 and the operating frequency of the bottom rectangular working coils 2120_5 and 2120_6 becomes 27 kHz, the frequency difference between $f_2$ and $f_1$ becomes 4 kHz, which may generate interference noise. Therefore, a method is needed to reduce or eliminate this interference noise.

In an embodiment of the disclosure, as a phase difference between the voltage and current of the working coil - $\triangle 2$ in the example described above - becomes greater than a predetermined phase difference value ($\triangle 1$) corresponding to a normal cooking vessel - a cooking vessel having a relatively high magnetic permeability, the processor 2200 may determine that the magnetic permeability of cooking vessel 2 is lower than magnetic permeability of cooking vessel 1 - a predetermined magnetic permeability, and perform asymmetrical control based on the determination.

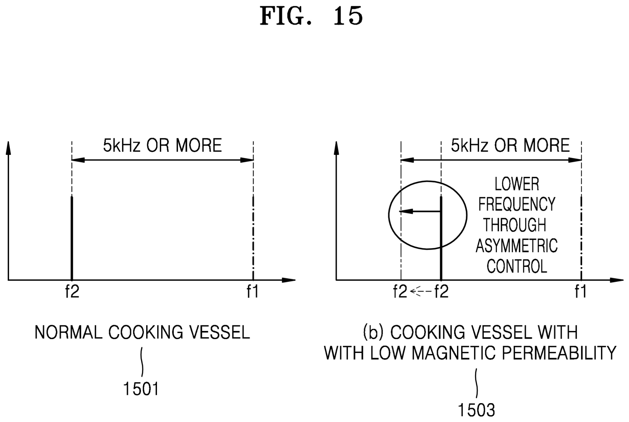

FIG. 15 is a diagram showing an operation of removing noise through asymmetric control in an induction heating device, according to an embodiment of the disclosure.

According to FIG. 15, a graph 1501 according to an embodiment of the disclosure is a case where the cooking vessel is normal (a large cooking vessel having relatively high magnetic permeability), and when such a cooking vessel is used, the inductances of the bottom rectangular working coils 2120_5 and 2120_6 are designed so that the operating frequency of the bottom rectangular working coils 2120_5 and 2120_6 operates at $f_2 = 25$ kHz, and the first working coil 2120_1 is designed to operate at $f_1 = 31$ kHz, so that the two operating frequencies differ by 5 kHz or more and thus noise is not generated.

Obviously, this is only an example, and as described above, the second working coil 2120_2 may be used instead of the bottom rectangular working coils 2120_5 and 2120_6.

However, in a graph 1503 according to an embodiment of the disclosure, a cooking vessel having low magnetic permeability is placed on the bottom rectangular working coils 2120_5 and 2120_6, and therefore, the operating frequency of the bottom rectangular working coils 2120_5 and 2120_6 is increased to $f_2 = 27$ kHz. In order to make the increased operating frequency $f_2$ of the bottom rectangular working coils 2120_5 and 2120_6 to satisfy $(f_1 - f_2) > 5$ kHz, the processor 2200 of the induction heating device 2000 may perform asymmetric control on the bottom rectangular working coils 2120_5 and 2120_6 to lower the operating frequency $f_2$ to, for example, 25 kHz. In this way, interference noise that may occur in a plurality of burners of the induction heating device 2000 may be eliminated.

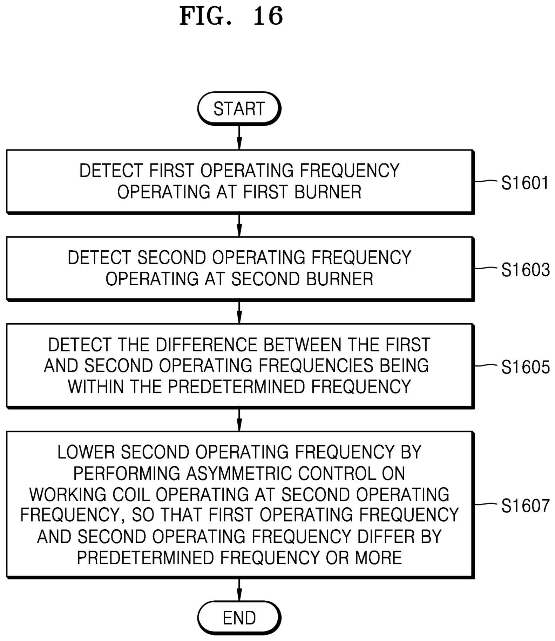

FIG. 16 is a flowchart of performing asymmetric control in an induction heating device, according to an embodiment of the disclosure.

In operation S1601, the induction heating device 2000 detects a first operating frequency operating in a first burner. In an embodiment of the disclosure, the first burner may be a circular burner.

In operation S1603, the induction heating device 2000 detects a second operating frequency operating in a second burner. In an embodiment of the disclosure, the second burner may be a rectangular burner, or may be a circular burner. An inductance value of a working coil corresponding to the first burner and an inductance value of a working coil corresponding to the second burner may be determined so that the second operating frequency in the working coil corresponding to the second burner and the first operating frequency in the working coil corresponding to the first burner differ by a predetermined frequency - for example, 5 kHz - or more.

In operation S1605, the induction heating device 2000 detects that the difference between the first operating frequency and the second operating frequency is within the predetermined frequency. However, in an embodiment of the disclosure, the second operating frequency of the second burner may be increased by placing a cooking vessel with lower magnetic permeability on the second burner. This allows the difference between the first operating frequency and the second operating frequency to be within a predetermined frequency - for example, 5 kHz.

In operation S1607, the induction heating device 2000 may reduce the second operating frequency by performing asymmetric control to make a duty ratio of a switching element switching for the working coil of the second burner corresponding to the second operating frequency (< the first operating frequency) different from each other. As a result, the difference between the first operating frequency and the second operating frequency may again be made greater than a predetermined frequency - for example, 5 kHz.

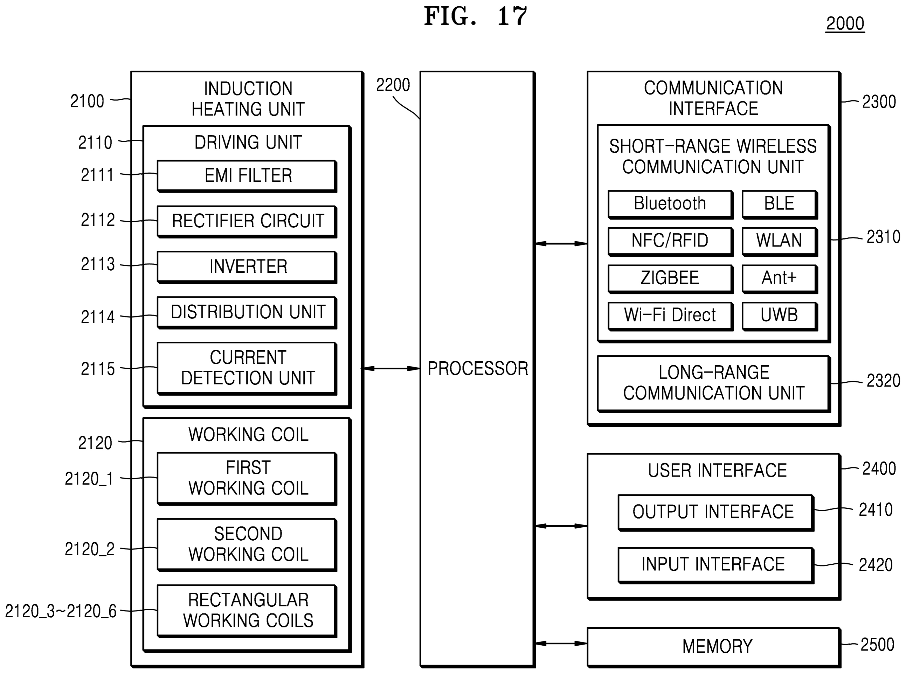

FIG. 17 is a block diagram of the induction heating device 2000 according to an embodiment of the disclosure.

As shown in FIG. 17, the induction heating device 2000 according to an embodiment of the disclosure may include an induction heating unit 2100, the processor 2200, a communication interface 2300, the user interface 2400, and memory 2500.

These elements are sequentially discussed below.

The induction heating unit 2100 may include, but is not limited to, a driving unit 2110 and the working coil 2120. The driving unit 2110 may receive power from the input power source 10 and may supply current to the working coil 2120 according to a driving control signal of the processor 2200. The driving unit 2110 may include, but is not limited to, an Electro Magnetic Interference (EMI) filter 2111, a rectifier circuit 2112, an inverter 2113, a distribution circuit 2114, and a current detection unit 2115. According to an embodiment of the disclosure, the driving unit 2110 may be referred to as an inverter in a broad sense. When the driving unit 2110 is called an inverter, the inverter 2113 of FIG. 17 may only mean a switching element that performs a switching operation to supply current to the working coil 2120.

The EMI filter 2111 may block high-frequency noise included in AC power supplied from input power source 10 and allow AC voltage and AC current of a predetermined frequency (e.g., 50 Hz or 60 Hz) to pass. A fuse and a relay may be provided between the EMI filter 2111 and the input power source 10 to block overcurrent. The AC power, with high-frequency noise blocked by the EMI filter 2111, may be supplied to rectifier circuit 2112.

The rectifier circuit 2112 may convert AC power into DC power. For example, the rectifier circuit 2112 may convert an AC voltage of which a magnitude and polarity (positive voltage or negative voltage) vary over time into a DC voltage of which a magnitude and polarity are constant, and may convert an AC current of which a magnitude and direction (positive current or negative current) vary over time into a DC current of which a polarity does not change over time. The rectifier circuit 2112 may include a bridge diode as a rectifying element. For example, the rectifier circuit 2112 may include four diodes. The bridge diode may convert an AC voltage of which a polarity changes over time into a positive voltage of which a polarity is constant, and may convert an AC current of which a direction changes over time into a positive current of which a direction is constant. The rectifier circuit 2112 may be connected to a DC link capacitor to rectify the rectified DC voltage.

The inverter 2113 may include a switching circuit configured to supply or cut off driving current to the working coil 2120, and a resonant capacitor configured to resonate with the working coil 2120. The switching circuit may include two switches per burner. For example, the switching circuit may include a first switch SW1 and 2113_1 and a second switch SW2 and 2113_2 for the first burner 201. In addition, when the induction heating device 2000 includes the second burner 202, the induction heating device 2000 may include a third switch SW3 and 2113_3 and a fourth switch SW4 and 2113_4 corresponding to the second burner 202. The first switch SW1 and 2113_1 and the second switch SW2, 2113_2 may be connected in series between plus and minus lines output from the rectifier circuit 2112. The first switch SW1 and 2113_1 and the second switch SW2 and 2113_2 may be turned on or off according to the driving control signal of the processor 2200. In an embodiment of the disclosure, the induction heating device 2000 may include a separate driving processor in addition to the processor 2200 to generate driving control signals.

The inverter 2113 may control the current supplied to the working coil 2120. For example, the size and direction of the current flowing in the first working coil 2120_1 may change depending on the turning on/off of the first switch SW1 and 2113_1 and the second switch SW2 and 2113_2 included in the inverter 2113. In addition, the size and direction of the current flowing in the second working coil 2120_2 may change depending on the turning on/off of the third switch SW3 and 2113_3 and the fourth switch SW4 and 2113_4 included in the inverter 2113. In this case, AC current may be supplied to the first working coil 2120_1 and the second working coil 2120_2. In addition, the rectangular working coils 2120_3 to 2120_6 may also be supplied with AC current by the inverter 2113. According to the switching operation of the first switch SW1 and 2113_1 and the second switch 2113_2, an AC current in the form of a sine wave may be supplied to the first working coil 2120_1. In addition, as switching cycles of the first switch SW1 and 2113_1 and the second switch SW2 and 2113_2 increases (for example, as the switching frequency of the first switch SW1 and 2113_1 and the second switch SW2 and 2113_2 decreases), the current supplied to the first working coil 2120_1 may increase, and a strength of a magnetic field output by the first working coil 2120_1 (the output of the induction heating device 2000) may increase. Although an embodiment is mainly described above with reference to the first switch SW1 and 2113_1, second switch 2113_2, and first working coil 2120_1, operations of the second working coil 2120_2 and the rectangular working coils 2120_3 to 2120_6 may also be performed in the same manner.

When the induction heating device 2000 includes a plurality of working coils 2120 - the first working coil 2120_1, the second working coils 2120_5 and 2120_6, and the rectangular working coils 2120_3 to 2120_6, as shown in FIG. 17, the driving unit 2110 may include the distribution circuit 2114. The distribution circuit 2114 may include a plurality of switches configured to pass or block current supplied to the plurality of working coils 2120, the plurality of switches may be turned on or off according to a distribution control signal.

The current detection unit 2115 may be a current sensor configured to measure current output from the inverter 2113 and flowing through the working coil 2120, and may include the CT1 2115_1 and CT2 2115_2. The current sensor may transmit an electrical signal corresponding to the measured current value to the processor 2200. Although not shown, the induction heating device 2000 may further include a voltage detection unit configured to sense voltage of the working coil 2120 in addition to the current detection unit 2115.

The processor 2200 may determine a switching frequency (turn-on/turn-off frequency) of a switching circuit included in the induction heating device 2000 based on an output intensity (power level) of the induction heating device 2000. The processor 2200 may generate a driving control signal for turn on or off the switching circuit based on the determined switching frequency. The induction heating device 2000 may include a separate driving processor from the processor 2200 to control an operation of the induction heating device 2000 during this operation of the processor 2200.

The working coil 2120 may generate a magnetic field for heating the cooking vessel 101. For example, when a driving current is supplied to the working coil 2120, a magnetic field may be induced around the working coil 2120. When current that varies in magnitude and direction over time, that is, AC current, is supplied to the working coil 2120, a magnetic field that varies in magnitude and direction over time may be induced around the working coil 2120. The magnetic field around the working coil 2120 may pass through a top plate including reinforced glass and reach the cooking vessel 101 placed on the top plate. Due to the magnetic field that varies in magnitude and direction over time, eddy currents that rotate around the magnetic field may occur in the cooking vessel 101, and electrical resistance heat may be generated in the cooking vessel 101 due to the eddy currents. The electrical resistance heat is heat generated in a resistor when current flows through the resistor, and may also be referred to as Joule heat. The cooking vessel 101 may be heated by the electrical resistance heat, and contents inside the cooking vessel 101 may be heated.

The processor 2200 may control an overall operation of the induction heating device 2000. The processor 2200 is a hardware device configured to control the overall operation of the induction heating device 2000. The processor 2200 may be a hardware chip including an integrated circuit having electrical circuits integrated therein. The processor 2200 may execute programs stored in the memory 2500 to control the induction heating unit 2100, the communication interface 2300, the user interface 2400, and the memory 2500. The induction heating device 2000 may include at least one processor. For example, the processor 2200 may include one processor or a plurality of processors. In addition, when the plurality of processors are provided, operations by the processors herein may be performed by any one of the plurality of processors. The induction heating device 2000 may include only a main processor, or may include a main processor and at least one sub-processor.

According to an embodiment of the disclosure, the induction heating device 2000 may include an artificial intelligence (AI) processor. The AI processor may be manufactured in the form of a dedicated hardware chip for AI, or may be manufactured as part of an existing general-purpose processor (e.g., central processing unit (CPU) or application processor) or graphics-only processor (e.g., graphics processing unit (GPU) and mounted on the induction heating device 2000.

When unique identification information of the cooking vessel 101 is stored in the memory 2500, the processor 2200 may establish a short-range wireless communication channel (e.g., BLE communication channel) with the cooking vessel 101 through the communication interface 2300.

The processor 2200 may perform asymmetric control between the plurality of working coils 2120. In an embodiment of the disclosure, when an operating frequency of the first working coil 2120_1 is $f_1$ and an operating frequency of the second working coil 2120_2 is $f_2$ ($f_1 > f_2$), the processor 2200 may control such that the operating frequency $f_2$ of the second working coil 2120_2 equals to the operating frequency of the first working coil 2120_1 $f_1$ ($f_1 = f_2$). Simultaneously, even when the operating frequency of the second working coil 2120_2 becomes $f_1$, the processor 2200 may perform asymmetric control so that an output at a burner corresponding to the second working coil 2120_2 when the operating frequency of the second working coil 2120_2 is $f_2$ is equal to the output when the operating frequency of the second working coil 2120_2 is $f_1$. The processor 2200 may perform asymmetric control by setting turn-on/turn-off duties of the third switch SW3 and 2113_3 and the fourth switch SW4 and 2113_4 to be different from each other, the third switch SW3 and 2113_3 and the fourth switch SW4 and 2113_4 performing switching so that an AC current flows through the second working coil 2120_2.

It is assumed that the operating frequency of the rectangular working coils 2120_3 to 2130_6 corresponding to a rectangular burner among the plurality of working coils 2120 is $f_3$, and the operating frequency of the first working coil 2120_1 corresponding to the circular burner is $f_1$ ($f_1 > f_3$). When a difference between the two operating frequencies is greater than 3 kHz and the two operating frequencies cannot be matched even when $f_1$ is lowered by asymmetric control, the processor 2200 may control such that an operating frequency $f_3$ of the rectangular working coils 2120_3 to 2130_6 is lowered by asymmetric control to allow the frequency difference between $f_1$ and $f_3$ to be 5 kHz or more.

The communication interface 2300 may include one or more elements that enable communication between the induction heating device 2000 and the cooking vessel 101, the induction heating device 2000 and a server device (not shown), or the induction heating device 2000 and a user terminal (not shown). For example, the communication interface 2300 may include a short-range wireless communication interface 2310 and a long-range communication unit 2320. The short-range wireless communication interface 2310 may include a Bluetooth communication unit, a BLE communication unit, a near field communication interface, a WLAN communication unit, a Zigbee communication unit, an IrDA communication unit, a WFD communication unit, a UWB communication unit, an Ant+ communication unit, and the like, but is not limited thereto. The long-range communication unit 2320 may be used to communicate with a server device (not shown) when the cooking vessel 101 is remotely controlled by the server device in an IoT environment. The long-range communication unit 2320 may include the Internet, a computer network (LAN or WAN), or a mobile communication unit. The mobile communication unit transmits and receives wireless signals to and from at least one of a base station, an external terminal, or a server. Here, the wireless signal may include various forms of data such as voice call signals, video call signals, or text/multimedia message transmission and reception. The mobile communication unit may include a 3G module, a 4G module, a 5G module, an LTE module, an NB-IoT module, a LTE-M module, or the like, but is not limited thereto.

The user interface 2400 may include an output interface 2410 and an input interface 2420. The output interface 2410 is for outputting audio signals or video signals and may include a display, an audio output unit, and the like.

When a display and a touch pad are configured as a touch screen in a layered structure, the display may be used as the input interface 2420 in addition to the output interface 2410. The display may include at least one of a liquid crystal display, a thin-film transistor-liquid crystal display, a light-emitting diode (LED), an organic light-emitting diode, a flexible display, a three-dimensional (3D) display, or an electrophoretic display. In addition, the induction heating device 2000 may include two or more displays, depending on the implementation form of the induction heating device 2000.

The audio output unit may output audio data received from the communication interface 2300 or stored in the memory 2500. In addition, the audio output unit may output audio signals related to functions performed in the induction heating device 2000. The audio output unit may include a speaker, a buzzer, and the like.

According to an embodiment of the disclosure, the output interface 2410 may display information about the cooking vessel 101. For example, the output interface 2410 may output a graphical user interface (GUI) corresponding to identification information or product type information of the cooking vessel 101. In addition, the output interface 2410 may output information about a current position of the cooking vessel 101.

The input interface 2420 is for receiving input from a user. The input interface 2420 may include at least one of a key pad, a dome switch, a touch pad (contact electrostatic capacitance type, pressure resistive film type, infrared detection type, surface ultrasonic conduction type, integral tension measurement type, piezo effect type, etc.), a jog wheel, or a jog switch, but is not limited thereto.

The input interface 2420 may include a speech recognition module. For example, the induction heating device 2000 may receive a speech signal, which is an analog signal, through a microphone and convert a speech portion into computer-readable text by using an automatic speech recognition (ASR) model. The induction heating device 2000 may obtain the intention of a user's speech by interpreting the text after conversion using a natural language understanding (NLU) model. Here, the ASR model or NLU model may be an AI model. The AI model may be processed by an AI-specific processor designed with a hardware structure specialized for processing AI models. The AI model may be created through training. Here, a predefined operation rule or an AI model being created by training refers to a predefined operation rule or an AI model established to perform a desired feature (or an object) being made when a basic AI model is trained by a training algorithm with a lot of training data. The AI model may include a plurality of neural network layers. Each of the plurality of neural network layers may have a plurality of weight values, and perform neural network operation through operation between an operation result of the previous layer and the plurality of weight values.

Linguistic understanding is a technology of recognizing and applying/processing human language/characters, including natural language processing, machine translation, dialog systems, question answering, and speech recognition/synthesis.

The memory 2500 may store a program for processing and controlling by the processor 2200, or may store input/output data (e.g., unique identification information of the cooking vessel 101, variable identification information of the cooking vessel 101, a plurality of power transmission patterns, cooking progress information of the cooking vessel 101, or the like). The memory 2500 may store an AI model.

The memory 2500 may include a storage medium of at least one type of a flash memory type, a hard disk type, a multimedia card micro type, a card type memory (e.g., a secure digital (SD) or extreme digital (XD) memory), random access memory (RAM), static RAM (SRAM), read-only memory (ROM), electrically erasable programmable ROM (EEPROM), programmable ROM (PROM), magnetic memory, magnetic disk, or an optical disk. In addition, the induction heating device 2000 may operate a web storage or cloud server that performs storage functions on the Internet.

An induction heating device according to an embodiment of the disclosure includes a first working coil for a circular first burner, a second working coil for a rectangular second burner, an inverter including a plurality of switches, the plurality of switches being configured to perform switching so that a current flows through the first working coil and the second working coil, and a processor configured to control the switching by the plurality of switches of the inverter, wherein an operating frequency of the first working coil and an operating frequency of the second working coil differ by a predetermined frequency value or more due to an inductance value of the first working coil and an inductance value of the second working coil.

In the induction heating device according to an embodiment of the disclosure, the first working coil includes a coil wound in a circular shape and the second working coil includes a coil wound in a rectangular shape.

In the induction heating device according to an embodiment of the disclosure, the predetermined frequency value is 5 kHz or more.

In the induction heating device according to an embodiment of the disclosure, the inverter further includes a second resonant capacitor configured to resonate with the second working coil, the plurality of switches include a third switch and a fourth switch that are switched on or off for resonance between the second working coil and the second resonant capacitor, and the processor is further configured to perform asymmetric control to make an on-duty ratio of the third switch greater than an on-duty ratio of the fourth switch, so as to control the operating frequency of the second working coil and the operating frequency of the first working coil to be different by a predetermined frequency value or more.

In the induction heating device according to an embodiment of the disclosure, the performing of the asymmetric control by the processor includes, when the operating frequency of the second working coil and the operating frequency of the first working coil do not differ by the predetermined frequency value or more due to magnetic permeability of a cooking vessel heated by the second working coil, performing the asymmetric control so that the operating frequency of the second working coil and the operating frequency of the first working coil differ by the predetermined frequency value or more.

In the induction heating device according to an embodiment of the disclosure, the operating frequency of the second working coil is lower than the operating frequency of the first working coil by the predetermined frequency value or more.

In the induction heating device according to an embodiment of the disclosure, the predetermined frequency value is about 5 kHz to about 10 kHz.

In the induction heating device according to an embodiment of the disclosure, the induction heating device further includes a current detection unit configured to detect a current flowing through the second working coil, and a voltage detection unit configured to detect a voltage of the second working coil, wherein the processor is further configured to detect a phase difference between a voltage applied to the second working coil of the cooking vessel by the voltage detection unit and a current flowing through the second working coil by the current detection unit.

In the induction heating device according to an embodiment of the disclosure, the processor is further configured to determine that the magnetic permeability of the cooking vessel is lower than a predetermined value when the phase difference of the current becomes greater than the predetermined value, and perform the asymmetric control based on a determination that the magnetic permeability of the cooking vessel is lower than the predetermined value.

In the induction heating device according to an embodiment of the disclosure, the processor is further configured to perform the asymmetric control at a frequency identical to a frequency of a symmetric control, performed before the asymmetric control, in which the on-duty ratio of the third switch and the on-duty ratio of the fourth switch are equal.

In the induction heating device according to an embodiment of the disclosure, the inverter further includes a first resonant capacitor configured to resonate with the first working coil, and a first switch and a second switch that are switched on or off for resonance between the first working coil and the first resonant capacitor, wherein the processor is further configured to control on-duty ratios of the first switch and the second switch to a fixed value during the asymmetric control.

An induction heating device according to an embodiment of the disclosure includes a first working coil for a first burner, a second working coil for a second burner, an inverter including a plurality of switches, the plurality of switches being configured to perform switching so that a current flows through the first working coil and the second working coil, and a processor configured to control the switching by the plurality of switches, wherein a maximum operating frequency of the first working coil and a maximum operating frequency of the second working coil differ by 5 kHz or more.

In the induction heating device according to an embodiment of the disclosure, the first burner is circular in shape and the second burner is rectangular in shape.

In the induction heating device according to an embodiment of the disclosure, the inverter further includes a resonant capacitor configured to resonate with the second working coil, the plurality of switches include a third switch and a fourth switch that are switched on or off for resonance between the second working coil and the resonant capacitor, and the processor is further configured to perform asymmetric control to make an on-duty ratio of the third switch greater than an on-duty ratio of the fourth switch, so as to control the operating frequency of the second working coil and the operating frequency of the first working coil to be different by at least 5 kHz.

In the induction heating device according to an embodiment of the disclosure, the performing of the asymmetric control by the processor includes performing the asymmetric control according to magnetic permeability of a cooking vessel heated by the second working coil or the cooking vessel being misaligned with the second burner.

In the induction heating device according to an embodiment of the disclosure, the processor is further configured to determine that the magnetic permeability of the cooking vessel is lower than a predetermined value when a phase difference between a voltage applied to the second working coil of the cooking vessel and a current flowing through the second working coil becomes greater than a predetermined value, and perform the asymmetric control based on a determination that the magnetic permeability of the cooking vessel is lower than the predetermined value.

In the induction heating device according to an embodiment of the disclosure, the processor is further configured to determine that the cooking vessel is misaligned with the second burner when the phase difference between the voltage applied to the second working coil of the cooking vessel and the current flowing through the second working coil becomes greater than the predetermined value, and perform the asymmetric control based on a determination that the cooking vessel is misaligned with the second burner.

In the induction heating device according to an embodiment of the disclosure, the processor is further configured to perform the asymmetric control at a frequency identical to a frequency of a symmetric control, performed before the asymmetric control, in which the on-duty ratio of the third switch and the on-duty ratio of the fourth switch are equal.

In the induction heating device according to an embodiment of the disclosure, the inverter further includes a first resonant capacitor configured to resonate with the first working coil, and a first switch and a second switch that are switched on or off for resonance between the first working coil and the first resonant capacitor, wherein the processor is further configured to control on-duty ratios of the first switch and the second switch to a fixed value during the asymmetric control.

A method of reducing noise by an induction heating device, according to an embodiment of the disclosure, includes operating a first working coil for a circular first burner and a second working coil for a rectangular second burner according to a user input, determining whether operating frequencies of the first working coil and the second working coil differ by a predetermined frequency value or more, and performing asymmetric control so that an on-duty ratio of the third switch from among the third switch and a fourth switch is greater than an on-duty ratio of the fourth switch, based on a determination that the operating frequencies of the first working coil and the second working coil do not differ by the predetermined frequency value or more, the third switch and the fourth switch being turned on or off for resonance between the second working coil and a second resonant capacitor.

A method according to an embodiment of the disclosure may be embodied as program commands executable by various computer means and may be recorded on a computer-readable recording medium. The computer-readable recording medium may include program commands, data files, data structures, and the like separately or in combinations. The program commands recorded on the computer-readable recording medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc ROM (CD-ROM) or a digital video disc (DVD), a magneto-optical medium such as a floptical disk, and a hardware device specially configured to store and execute program commands such as ROM, RAM, or a flash memory. Examples of the program commands include advanced language codes that may be executed by a computer by using an interpreter or the like as well as machine language codes made by a compiler.

Some embodiments of the disclosure may also be realized in a form of a recording medium including instructions executable by a computer, such as a program module executed by a computer. A computer-readable medium may be an arbitrary available medium accessible by a computer, and includes all volatile and non-volatile media and separable and non-separable media. Further, the computer-readable medium may include both a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. Communication media typically includes computer readable instructions, data structures, program modules, or other data in a modulated data signal such as a carrier wave, or other transport mechanism, and includes any information delivery media. Additionally, some embodiments of the may also be implemented as a computer program or computer program product including computer-executable instructions, such as a computer program executed by a computer.

A machine-readable storage medium may be provided in a form of a non-transitory storage medium. Here, the non-transitory storage medium only denotes a tangible device and does not contain a signal (for example, electromagnetic waves). This term does not distinguish a case where data is stored in the storage medium semi-permanently from a case where the data is stored in the storage medium temporarily. For example, the non-transitory storage medium may include a buffer where data is temporarily stored.

According to an embodiment of the disclosure, a method according to an embodiment disclosed herein may be provided by being included in a computer program product. The computer program products are product that can be traded between sellers and buyers. The computer program product may be distributed in a form of machine-readable storage medium (for example, CD-ROM)), or distributed (for example, downloaded or uploaded) through an application store or directly or online between two user devices (for example, smartphones). In the case of online distribution, at least part of the computer program product (for example, a downloadable application) may be at least temporarily generated or temporarily stored in a machine-readable storage medium, such as a server of a manufacturer, a server of an application store, or memory of a relay server.

**Claims**

1. An induction heating device comprising:

   a first burner;
   a first working coil for the first burner;
   a second burner;
   a second working coil for the second burner;

an inverter including a plurality of switches, the plurality of switches being configured to perform switching so that a current flows through the first working coil and the second working coil; and
a processor configured to control the switching by the plurality of switches so that:

the first working coil has a first operating frequency due to an inductance value of the first working coil and the current flowing through the first working coil,
the second working coil has a second operating frequency due to an inductance value of the second working coil and the current flowing through the second working coil, and
the first operating frequency differs from the second operating frequency by a predetermined frequency value or more.

2. The induction heating device of claim 1, wherein

the first working coil includes a coil wound in a circular shape, and
the second working coil includes a coil wound in a rectangular shape.

3. The induction heating device of any one of claims 1 and claim 2, wherein
the predetermined frequency value is 5 kilohertz (kHz) or more.

4. The induction heating device of any one of claims 1 to claim 3, wherein

the inverter includes:

a first resonant capacitor configured to resonate with the first working coil, and
a second resonant capacitor configured to resonate with the second working coil,

the plurality of switches include:

a first switch and a second switch that are switched on and off for resonance between the first working coil and the first resonant capacitor, and
a third switch and a fourth switch that are switched on and off for resonance between the second working coil and the second resonant capacitor, and

the processor is configured to perform asymmetric control of the third switch and the fourth switch to make an on-duty ratio of the third switch greater than an on-duty ratio of the fourth switch.

5. The induction heating device of claim 4, wherein
the processor is configured to perform the asymmetric control when the first operating frequency and the second operating frequency do not differ by the predetermined frequency value or more due to magnetic permeability of a cooking vessel heated by the second working coil.

6. The induction heating device of claim 5, wherein
the processor is configured to perform the asymmetric control so that the second operating frequency is lower than the first operating frequency by the predetermined frequency value or more.

7. The induction heating device of any one of claim 5 to claim 6, wherein
the predetermined frequency value is 5 kHz to 10 kHz.

8. The induction heating device of any one of claim 5 to claim 7, further comprising:

a current detection unit configured to detect the current flowing through the second working coil; and
a voltage detection unit configured to detect a voltage of the second working coil,
wherein the processor is configured to detect a phase difference between a detected voltage applied to the second working coil due to the cooking vessel and the detected current flowing through the second working coil.

9. The induction heating device of claim 8, wherein
the processor is configured to:

determine that the magnetic permeability of the cooking vessel is lower than a predetermined magnetic permeability value when the detected phase difference of the current flowing through the second working coil becomes greater than a predetermined phase difference value, and

perform the asymmetric control based on the determination that the magnetic permeability of the cooking vessel is lower than the predetermined magnetic permeability value.

10. The induction heating device of any one of claim 4 to claim 9, wherein
the processor is configured to perform the asymmetric control at a frequency identical to a frequency of a symmetric control, performed before the asymmetric control, in which the on-duty ratio of the third switch and the on-duty ratio of the fourth switch are equal.

11. The induction heating device of any one of claim 4 to claim 10, wherein
the processor is configured to control the on-duty ratio of the first switch and the on-duty ratio of the second switch at a fixed value during the asymmetric control.

12. An induction heating device comprising:

a first burner;
a first working coil for the first burner;
a second burner;
a second working coil for the second burner;
an inverter including a plurality of switches, the plurality of switches being configured to perform switching so that a current flows through the first working coil and the second working coil; and
a processor configured to control the switching by the plurality of switches so that:
a maximum operating frequency of the first working coil and a maximum operating frequency of the second working coil differ by 5 kilohertz (kHz) or more.

13. The induction heating device of claim 12, wherein

the inverter includes:

a first resonant capacitor configured to resonate with the first working coil, and
a second resonant capacitor configured to resonate with the second working coil,

the plurality of switches include:

a first switch and a second switch that are switched on and off for resonance between the first working coil and the first resonant capacitor, and
a third switch and a fourth switch that are switched on and off for resonance between the second working coil and the second resonant capacitor, and

the processor is configured to perform asymmetric control of the third switch and the fourth switch to make an on-duty ratio of the third switch greater than an on-duty ratio of the fourth switch.

14. The induction heating device of claim 13, wherein
the processor is configured to perform the asymmetric control according to magnetic permeability of a cooking vessel heated by the second working coil or the cooking vessel being misaligned with the second burner.

15. A method of reducing noise of an induction heating device including a first burner, a first working coil for the first burner, a second burner, a second working coil for the second burner, an inverter including a plurality of switches configured to perform switching so that a current flows through the first working coil and the second working coil, and a resonant capacitor configured to resonate with the second working coil, the plurality of switches including a first switch and a second switch that are switched on and off for resonance between the second working coil and the resonant capacitor, the method comprising:

operating the first working coil for the first burner and the second working coil for the second burner according to a user input;
determining whether an operating frequency of the first working coil and an operating frequency of the second working coil differ by a predetermined frequency value or more; and

based on a determination that the operating frequency of the first working coil and the operating frequency of the second working coil do not differ by the predetermined frequency value or more, performing asymmetric control so that an on-duty ratio of the first switch is greater than an on-duty ratio of the second switch.

FIG. 1A

# FIG. 1B

# FIG. 2

COOKING
VESSEL
(101)

IH metal

2000

WORKING COIL (2120)

# FIG. 3

FIG. 4

FIG. 5

# FIG. 6A

# FIG. 6B

```
              ┌─────────┐
              │  START  │
              └────┬────┘
                   │
                   ▼
   ┌─────────────────────────────────┐
   │      INITIATE OPERATIONS OF      │─── S601
   │   FIRST BURNER AND SECOND BURNER │
   └────────────────┬────────────────┘
                    │
                    ▼
   ┌─────────────────────────────────┐
   │  DETERMINE FIRST OPERATING       │
   │  FREQUENCY AT FIRST BURNER AND   │─── S603
   │  SECOND OPERATING FREQUENCY AT   │
   │  SECOND BURNER                   │
   └────────────────┬────────────────┘
                    │
                    ▼
   ┌─────────────────────────────────┐
   │  PERFORM ASYMMETRIC CONTROL TO   │
   │  MATCH FIRST OPERATING FREQUENCY │─── S605
   │  WITH SECOND OPERATING FREQUENCY │
   └────────────────┬────────────────┘
                    │
                    ▼
              ┌─────────┐
              │   END   │
              └─────────┘
```

# FIG. 7A

# FIG. 7B

# FIG. 8

# FIG. 9

INDUCTANCE

INDUCTANCE FOR EACH FREQUENCY

← RECTANGULAR (910)

← CIRCULAR (920)

FREQUENCY

—·—·—· RECTANGULAR     ——— CIRCULAR

# FIG. 10A

# FIG. 10B

# FIG. 11

# FIG. 12

# FIG. 13A

13

MAGNETIC
FLUX

# FIG. 13B

103

2000

2120

# FIG. 13C

105

2000

2120

# FIG. 13D

FIG. 14

# FIG. 15

NORMAL COOKING VESSEL
⌒
1501

(b) COOKING VESSEL WITH
WITH LOW MAGNETIC PERMEABILITY
⌒
1503

# FIG. 16

```
                    ┌─────────┐
                    │  START  │
                    └────┬────┘
                         │
                         ▼
   ┌───────────────────────────────────────────┐
   │     DETECT FIRST OPERATING FREQUENCY       │── S1601
   │       OPERATING AT FIRST BURNER            │
   └───────────────────┬───────────────────────┘
                       │
                       ▼
   ┌───────────────────────────────────────────┐
   │    DETECT SECOND OPERATING FREQUENCY       │── S1603
   │      OPERATING AT SECOND BURNER            │
   └───────────────────┬───────────────────────┘
                       │
                       ▼
   ┌───────────────────────────────────────────┐
   │  DETECT THE DIFFERENCE BETWEEN THE FIRST   │
   │  AND SECOND OPERATING FREQUENCIES BEING    │── S1605
   │     WITHIN THE PREDETERMINED FREQUENCY     │
   └───────────────────┬───────────────────────┘
                       │
                       ▼
   ┌───────────────────────────────────────────┐
   │    LOWER SECOND OPERATING FREQUENCY BY     │
   │     PERFORMING ASYMMETRIC CONTROL ON       │
   │  WORKING COIL OPERATING AT SECOND OPERATING│── S1607
   │ FREQUENCY, SO THAT FIRST OPERATING FREQUENCY│
   │  AND SECOND OPERATING FREQUENCY DIFFER BY  │
   │     PREDETERMINED FREQUENCY OR MORE        │
   └───────────────────┬───────────────────────┘
                       │
                       ▼
                    ┌─────────┐
                    │   END   │
                    └─────────┘
```

# FIG. 17

**2000**

INDUCTION HEATING UNIT — 2100
- DRIVING UNIT — 2110
  - EMI FILTER — 2111
  - RECTIFIER CIRCUIT — 2112
  - INVERTER — 2113
  - DISTRIBUTION UNIT — 2114
  - CURRENT DETECTION UNIT — 2115
- WORKING COIL — 2120
  - FIRST WORKING COIL — 2120_1
  - SECOND WORKING COIL — 2120_2
  - RECTANGULAR WORKING COILS — 2120_3~2120_6

PROCESSOR — 2200

COMMUNICATION INTERFACE — 2300
- SHORT-RANGE WIRELESS COMMUNICATION UNIT — 2310
  - Bluetooth | BLE
  - NFC/RFID | WLAN
  - ZIGBEE | Ant+
  - Wi-Fi Direct | UWB
- LONG-RANGE COMMUNICATION UNIT — 2320

USER INTERFACE — 2400
- OUTPUT INTERFACE — 2410
- INPUT INTERFACE — 2420

MEMORY — 2500

EP 4 730 916 A1

## INTERNATIONAL SEARCH REPORT

| International application No. |
| --- |
| **PCT/KR2024/015097** |

| A. | CLASSIFICATION OF SUBJECT MATTER |
| --- | --- |

**H05B 6/06**(2006.01)i; **H05B 6/12**(2006.01)i; **H02M 1/10**(2006.01)i; **H02M 7/04**(2006.01)i

According to International Patent Classification (IPC) or to both national classification and IPC

| B. | FIELDS SEARCHED |
| --- | --- |

Minimum documentation searched (classification system followed by classification symbols)

H05B 6/06(2006.01); H02M 7/48(2007.01); H02M 7/5387(2007.01); H05B 6/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: working coil, inductance, operating frequency, difference, reference range, asymmetric, on-duty ratio, induction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2020-0017800 A (LG ELECTRONICS INC.) 19 February 2020 (2020-02-19)<br>See paragraphs [0007] and [0028]-[0082]; claims 1 and 6; and figures 1 and 3-4. | 12 |
| Y | | 1-4,13,15 |
| A | | 5-11,14 |
| Y | KR 10-2020-0114433 A (CUCHEN CO., LTD.) 07 October 2020 (2020-10-07)<br>See paragraphs [0032]-[0054]; and figures 4 and 8. | 1-4 |
| Y | KR 10-2021-0135854 A (LG ELECTRONICS INC.) 16 November 2021 (2021-11-16)<br>See paragraphs [0006]-[0009] and [0055]-[0205]; claims 1 and 7; and figures 1-3, 5, 15 and 19. | 4,13,15 |
| A | KR 10-2017-0075913 A (CUCKOO ELECTRONICS CO., LTD.) 04 July 2017 (2017-07-04)<br>See paragraphs [0026]-[0095]; and figures 1-3. | 1-15 |

| ✓ Further documents are listed in the continuation of Box C. | ✓ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **03 January 2025** | **06 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/015097** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0115707 A (CUCHEN CO., LTD.) 18 October 2017 (2017-10-18)<br>    See paragraphs [0028]-[0045]; and figures 2-3. | 1-15 |

Form PCT/ISA/210 (second sheet) (July 2022)

**INTERNATIONAL SEARCH REPORT**
**Information on patent family members**

International application No.

**PCT/KR2024/015097**

| Patent document cited in search report | | | Publication date (day/month/year) | Patent family member(s) | | | Publication date (day/month/year) |
|---|---|---|---|---|---|---|---|
| KR | 10-2020-0017800 | A | 19 February 2020 | EP | 3609294 | A1 | 12 February 2020 |
| | | | | EP | 3609294 | B1 | 24 February 2021 |
| | | | | US | 12016102 | B2 | 18 June 2024 |
| | | | | US | 2020-0053838 | A1 | 13 February 2020 |
| KR | 10-2020-0114433 | A | 07 October 2020 | KR | 10-2175638 | B1 | 06 November 2020 |
| KR | 10-2021-0135854 | A | 16 November 2021 | AU | 2021-268495 | A1 | 11 November 2021 |
| | | | | CN | 115517016 | A | 23 December 2022 |
| | | | | EP | 3908077 | A1 | 10 November 2021 |
| | | | | US | 11882640 | B2 | 23 January 2024 |
| | | | | US | 2021-0352773 | A1 | 11 November 2021 |
| | | | | WO | 2021-225373 | A1 | 11 November 2021 |
| KR | 10-2017-0075913 | A | 04 July 2017 | KR | 10-2382949 | B1 | 06 April 2022 |
| KR | 10-2017-0115707 | A | 18 October 2017 | KR | 10-1857662 | B1 | 28 June 2018 |

Form PCT/ISA/210 (patent family annex) (July 2022)